# EUROPEAN PATENT APPLICATION

(11) **EP 4 699 861 A1**
(43) Date of publication of application: **25.02.2026**
(21) Application number: 25197517.3
(22) Date of filing: 22.08.2025
(51) Int. Cl.: B60N 2/56, B60N 2/72

(54) **A SEAT SYSTEM AND METHOD OF ASSEMBLY**

(30) Priority: 23.08.2024 US 202463686519 P; 09.05.2025 US 202563802744 P
(71) Applicant: Adient US LLC, Plymouth, MI 48170 (US)
(72) Inventor: BASHIR, Raza Ahmed, Sterling Heights, 48312 (US); GOMEZ, John J., Howell, 48843 (US); SOLIVEN, Reinier, Oakland Township, 48306 (US); GASKO, Joseph, Commerce Township, 48382 (US); SPADARO, Anthony, Farmington Hills, 48331 (US)
(74) Representative: Liedtke & Partner Patentanwälte

(57) **Abstract**

A seat (112) for a vehicle may have a frame (114, 120), a seat back module (116) and a seat cushion module (118). The frame (114, 120, 122) may have a back frame (122) and a lower structure or seat frame (120). The seat back module (116) may have a back trim cover coupled to a back carrier. The seat cushion module (118) may have a cushion trim cover coupled to a cushion carrier. A process for assembling the seat (112) is also provided.

## Description

### FIELD

The field may relate to a seat system, such as for a vehicle, including a method of assembly of the seat system.

### BACKGROUND

Vehicle seats have evolved into complex pieces of machinery that can be difficult to manufacture and install. The complexity is driven in part by consumer demand for high quality seats with many comfort and aesthetic features. The complexity may drive up costs.

In view of the disadvantages associated with current vehicle seats it would be advantageous to have a vehicle seat that was cost effective, easy to install and adaptable to a wide variety of vehicles and consumers by being module in nature.

### SUMMARY

A seat for a vehicle may have a frame, a seat back module and a seat cushion module, where the frame may comprises a back frame and a seat frame, where the seat back module comprises a back trim cover coupled to a back carrier, where the seat cushion module comprises cushion trim cover coupled to a cushion carrier.

The seat cushion module may be configured for snap-fit assembly to the seat frame and the seat back module is configured for snap-fit assembly to the back frame.

The back carrier may comprise a clip and the back frame comprises a lower cross member, where the clip may be configured to be assembled to the lower cross member, where the lower cross member may comprise a feature configured for alignment of the clip, where the feature may comprise at least one of (a) a marking; (b) a rib; (c) a projection, where the clip may be configured to flex to facilitate rotation of the back carrier about the lower cross member.

The back carrier may comprise a first tab and a second tab, where the back carrier may be configured to be rotated about the lower cross member to facilitate engagement of (a) the first tab with the back frame and (b) the second tab with the back frame, where at least one of the first tab and the second tab may be configured to flex during assembly of the seat back module to the back frame.

The seat may have a blower, where the back carrier may be configured for attachment of the blower, where the blower may comprise (a) a tab configured to slide into a cup of the back barrier and (b) an aperture configured to snap on a clip of the back carrier.

The seat may have a shield assembled to the seat frame, where an edge of the cushion trim cover may be coupled between the cushion carrier and an upper portion of the side shield.

The seat frame may comprise a receptacle configured to receive an attachment of the seat cushion module.

The receptacle may comprise a clip.

The cushion carrier may comprise an attachment configured to snap into the receptable, where the attachment may comprise a one-piece, unitary attachment integrally formed with the cushion carrier.

The seat cushion module may comprise a snap feature on a front edge portion of the cushion carrier configured to couple the seat cushion module to the seat frame.

The seat cushion module may comprise a cushioning member, where the cushioning member may comprise an aperture configured to facilitate airflow, where the cushion carrier may comprise a channel adjacent the aperture of the cushioning member configured to facilitate airflow.

The cushion carrier may comprise a groove on a perimeter of the cushion carrier, where the groove may comprise a U-shape comprising an inner leg and an outer leg, where the cushion trim cover may be wrapped around the outer leg of the groove, where one of the legs may comprise a retention feature configured to retain the seat frame therein.

The groove may comprise a one-piece, unitary groove integrally formed with the cushion carrier.

The cushion carrier may comprise a retention feature configured to retain a rear enclosure to the cushion module, where the rear enclosure may be configured to cover the back frame and a rear portion of the cushion carrier, where the rear enclosure may comprise a strap configured to be retained by the retention feature of the cushion carrier.

The seat may also comprise a cleat assembled to the back frame configured for assembly of the back carrier to the back frame.

A process for producing a seat for a vehicle may comprise
(a) providing a frame;
(b) assembling a back trim cover to a back carrier to provide a seat back module;
(c) assembling a cushion trim cover to a cushion carrier to provide a seat cushion module;
(d) coupling the seat cushion module to the frame; and
(e) coupling the seat back module to the frame.

The step of coupling the seat back module to the frame may comprise assembling a clip of the back carrier to a lower cross member of the back frame; and
where the step of coupling the seat back module to the frame may further comprise rotating the back carrier about the lower cross member via flexing the clip.

The step of coupling the seat back module to the frame further may comprise rotating the back carrier about the lower cross member to engage (a) a first tab of the back carrier with the back frame and (b) a second tab of the back carrier with the back frame;
where engaging the first tab of the back carrier with the back frame and the second tab of the back carrier with the back frame may comprise flexing at least one of the first tab and the second tab against the back frame.

The step of coupling the seat back module to the frame may comprise closing a zipper of the back trim cover to enclose a back side of the seat.

The step of coupling the seat cushion module to the frame may comprise (a) snapping an attachment of the cushion carrier into a receptable of the frame and (b) snapping the cushion module on a front edge portion of the cushion carrier.

A process for producing a seat for a vehicle may comprise
(a) providing a frame;
(b) assembling a back trim cover to a back carrier to provide a seat back module;
(c) assembling a cushion trim cover to a cushion carrier to provide a seat cushion module;
(d) coupling the seat cushion module to the frame; and
(e) coupling the seat back module to the frame.

The step of providing the frame may comprise assembling a back frame to a seat frame.

The step of coupling the seat back module to the frame may comprise assembling a clip of the back carrier to a lower cross member of the back frame.

The step of coupling the seat back module to the frame further may comprise rotating the back carrier about the lower cross member via flexing the clip.

The step of coupling the seat back module to the frame may further comprise rotating the back carrier about the lower cross member to engage (a) a first tab of the back carrier with the back frame and (b) a second tab of the back carrier with the back frame.

Engaging the first tab of the back carrier with the back frame and the second tab of the back carrier with the back frame may comprise making snap-fit connections of the first tab and the second tab with the back frame.

Engaging the first tab of the back carrier with the back frame and the second tab of the back carrier with the back frame may comprise flexing at least one of the first tab and the second tab against the back frame.

Engaging the first tab of the back carrier with the back frame and the second tab of the back carrier with the back frame may comprise flexing the first tab and the second tab toward a centerline of the seat.

Engaging the first tab of the back carrier with the back frame and the second tab of the back carrier with the back frame may comprise sliding at least one of the first tab and the second tab along the back frame.

The step of coupling the seat back module to the frame may further comprise flexing the first tab and the second tab away from a centerline of the back frame.

The step of coupling the seat back module to the frame may comprise extending head restraint posts through the back carrier and the back frame.

The process may also further comprise the step of assembling a rear enclosure to the back frame.

The step of assembling a rear enclosure to the back frame may comprise sliding an edge of the rear enclosure into a channel of the back carrier.

The step of coupling the seat back module to the frame may comprise closing a zipper of the back trim cover to enclose a back side of the seat.

A seat for a vehicle may comprise a frame, a seat back module and a seat cushion module. The frame may comprise a back frame and a lower structure. The seat back module may comprise a back trim cover coupled to a back carrier. The seat cushion module may comprise cushion trim cover coupled to a cushion carrier. The seat cushion module may be configured for snap-fit assembly to the frame. The seat back module may be configured for snap-fit assembly to the frame. The back carrier may comprise a suspension system. The seat back module may be configured to be assembled to the frame after assembly of the back frame to the lower structure.

The back carrier may comprise a channel on a perimeter side of the back carrier. The channel may comprise a U-shaped channel. The back trim cover may be configured for attachment to the channel. The seat may comprise a rear enclosure configured to cover the frame. An edge of the rear enclosure may be configured to be nested in the channel. An edge of the back trim cover and an edge of the rear enclosure may be configured to be nested in the channel. The back carrier may comprise a tab configured to retain the rear enclosure in the channel. The rear enclosure may comprise a recess configured to mate to the tab of the back carrier. The rear enclosure may comprise a bead configured to be retained by the tab of the back carrier. The rear enclosure may comprise a retainer sewn to the rear enclosure and configured to be retained the back carrier. The channel may be configured to support an outer portion of a back cushioning member. The channel may be coupled between a back cushioning member and the back trim cover. The channel may comprise a U-shape comprising an inner leg and an outer leg. The back trim cover may be wrapped around the outer leg of the channel.

The back carrier may comprise a clip and the back frame may comprise a lower cross member. The clip may be configured to be assembled to the lower cross member. The lower cross member may comprise a feature configured for alignment of the clip. The feature may comprise at least one of (a) a marking; (b) a rib; (c) a projection. The clip may be configured to flex to facilitate rotation of the back carrier about the lower cross member. The back carrier may comprise a first tab and a second tab. The first tab may comprise a one-piece, unitary tab integrally formed with the back carrier. The first tab may be configured for a snap-fit connection to the back frame. The back carrier may be configured to be rotated about the lower cross member to facilitate engagement of (a) the first tab with the back frame and (b) the second tab with the back frame. At least one of the first tab and the second tab may be configured to flex during assembly of the seat back module to the back frame. The first tab and the second tab may be configured to flex toward one another during assembly of the seat back module to the back frame. The first tab and the second tab may be configured to slide along the back frame during assembly of the seat back module to the back frame. The first tab and the second tab may be configured to flex outward away from a centerline of the back frame to snap into engagement with the back frame.

The seat may comprise a head restraint bezel extending through the back carrier and the back frame. The head restraint bezel may be configured to register the back carrier to an upper cross member of the back frame.

The back carrier may comprise a lumbar mechanism. The lumbar mechanism may be coupled to a back side of the back carrier opposite a back cushioning member. The back carrier may comprise a portion configured to separate the lumbar mechanism from a back cushioning member. The lumbar mechanism may be configured to flex the back carrier. The back carrier may comprise a housing configured for routing a wire of the lumbar mechanism. The lumbar mechanism may comprise a hook configured to attach the lumbar mechanism to the back carrier. The frame may comprise an alignment feature configured to receive the hook of the lumbar mechanism to register the back carrier to the frame.

The seat may comprise a rear enclosure configured to cover the back frame. The rear enclosure may comprise a weakened portion configured to provide a door during deployment of an airbag. The weakened portion may comprise a set of perforations in the rear enclosure. The rear enclosure may comprise a set of angled clips configured to align the rear enclosure relative to the back frame. The set of angled clips may be configured to align the rear enclosure relative to the back frame in a vertical direction and a horizontal direction and a fore-aft direction. The set of angled clips may be angled toward a centerline of the seat. The rear enclosure may comprise a set of standoffs configured to align the rear enclosure relative to the back frame in a fore-aft direction. The rear enclosure may comprise a set of tabs configured to align the rear enclosure relative to the back frame in a cross-car direction. The rear enclosure may comprise a set of tabs configured to locate the rear enclosure relative to the back frame in a vertical direction and a fore-aft direction.

The back carrier may comprise a feature configured to align a seam of the back trim cover with a seam of the cushion trim cover.

The seat may comprise a blower; the back carrier may be configured for attachment of the blower. The back carrier may comprise a cup on a back side of the back carrier configured to retain a tab of the blower. The back carrier may comprise a clip on a back side of the back carrier configured to retain a tab of the blower. The blower may comprise (a) a tab configured to slide into a cup of the back barrier and (b) an aperture configured to snap on a clip of the back carrier.

The back carrier may comprise an inner panel and a bolster panel. The inner panel may be coupled to the bolster panel by a set of wires. The set of wires may comprise a set of rigid wires to facilitate movement of the inner panel relative to the bolster panel. The inner panel may comprise a clip configured to be assembled to a lower cross member of the back frame and the bolster panel may comprise a hook configured to be assembled to an upper cross member of the back frame. The inner panel may comprise a suspension panel. The inner panel may be configured to flex in response to loading from an occupant of the seat. The bolster panel may extend around two facing sides of the inner panel and an upper side of the inner panel.

The cushion carrier may comprise a feature configured to align a seam of the cushion trim cover with a seam of the back trim cover. The feature of the cushion carrier may comprise a trench configured to retain the cushion trim cover. The feature of the cushion carrier may comprise a projection in a rear wall of the cushion carrier configured to retain the cushion trim cover. The cushion trim cover may comprise a strip comprising an aperture configured to snap on the projection in the rear wall of the cushion carrier. The strip may comprise a J strip configured to clip the cushion trim cover to the cushion carrier. The cushion carrier may comprise a rib configured to (a) align the strip to the cushion carrier and (b) align the seat cushion module to the frame. The cushion carrier may comprise a slot configured to provide flexibility for the cushion carrier. The cushion carrier may comprise a wire configured to extend across the slot. The wire may comprise a sinusoidal wire. The wire may be configured to provide flexibility for the cushion carrier. The cushion carrier may comprise a wire configured to reinforce the cushion carrier. The cushion carrier may comprise a depression configured to facilitate flexure of the cushion carrier.

The seat may comprise a shield assembled to the lower structure. The seat may comprise a fastener configured to fasten the shield to a flange of the lower structure. The seat cushion module may be configured to hide the fastener. An edge of the cushion trim cover may be coupled between the cushion carrier and the flange of the lower structure.

The lower structure may comprise a receptacle configured to receive an attachment of the seat cushion module. The receptacle may comprise a clip. The receptacle may be configured to align the seat cushion module to the lower structure. The cushion carrier may comprise an attachment configured to snap into the receptable. The attachment may comprise a one-piece, unitary attachment integrally formed with the cushion carrier. The receptacle may comprise a left receptacle on a left side of the lower structure and a right receptable on a right side of the lower structure. The attachment may comprise a left attachment on a left side of the cushion carrier and a right attachment on a right side of the cushion carrier. The seat cushion module may comprise an alignment feature on an underside of the cushion carrier. The alignment feature may comprise at least one of (a) a rib; (b) a flange; (c) a stand-off. The alignment feature may be configured to engage the lower structure to align the seat cushion module with the lower structure. The alignment feature may comprise a one-piece, unitary tab integrally formed with the cushion carrier. The seat cushion module may comprise a snap feature on a front edge of the cushion carrier configured to couple the seat cushion module to the lower structure.

The seat may comprise a back cushioning member. The back cushioning member may comprise a back pad. The back pad may comprise a foam material.

The seat cushion module may comprise a cushioning member. The cushioning member may comprise a cushion pad. The cushion pad may comprise a foam material. The cushioning member may comprise an aperture configured to facilitate airflow. The cushioning member may comprise a reinforcement adjacent the aperture. The reinforcement may comprise a felt material. The cushion carrier may comprise a channel adjacent the aperture of the cushioning member configured to facilitate airflow. The cushion trim cover may comprise a set of perforations adjacent the aperture of the cushioning member configured to facilitate airflow.

The cushion carrier may comprise a channel on a perimeter of the cushion carrier. The channel may comprise a U-shaped channel. The cushion trim cover may be configured for attachment to the channel. The channel may be configured to support a portion of a cushioning member. The channel may be coupled between a cushioning member and the lower structure. The channel may comprise a U-shape comprising an inner leg and an outer leg. The cushion trim cover may be wrapped around the outer leg of the channel. The inner leg of the channel may comprise a retention feature configured to clip the cushion module to the lower structure. The cushion trim cover may be configured to provide a force to the channel to retain the retention feature to the lower structure. The retention feature may comprise a J hook. The channel may comprise a one-piece, unitary channel integrally formed with the cushion carrier.
The cushion carrier may comprise a retention feature configured to retain a rear enclosure to the cushion module. The rear enclosure may be configured to cover the back frame and a rear portion of the cushion carrier. The retention feature may comprise a strap.

The back carrier may comprise a seat back panel.

A process for producing a seat for a vehicle may comprise providing a frame; assembling a back trim cover to a back carrier to provide a seat back module; assembling a cushion trim cover to a cushion carrier to provide a seat cushion module; coupling the seat cushion module to the frame; and coupling the seat back module to the frame.

The step of providing the frame may comprise assembling a back frame to a lower structure. The step of coupling the seat back module to the frame may comprise assembling a clip of the back carrier to a lower cross member of the back frame. The step of coupling the seat back module to the frame may comprise rotating the back carrier about the lower cross member via flexing the clip.
The step of coupling the seat back module to the frame may comprise rotating the back carrier about the lower cross member to engage (a) a first tab of the back carrier with the back frame and (b) a second tab of the back carrier with the back frame. Engaging the first tab of the back carrier with the back frame and the second tab of the back carrier with the back frame may comprise making snap-fit connections of the first tab and the second tab with the back frame. Engaging the first tab of the back carrier with the back frame and the second tab of the back carrier with the back frame may comprise flexing at least one of the first tab and the second tab against the back frame. Engaging the first tab of the back carrier with the back frame and the second tab of the back carrier with the back frame may comprise flexing the first tab and the second tab toward a centerline of the seat. Engaging the first tab of the back carrier with the back frame and the second tab of the back carrier with the back frame may comprise sliding at least one of the first tab and the second tab along the back frame. The step of coupling the seat back module to the frame may comprise flexing the first tab and the second tab away from a centerline of the back frame. The step of coupling the seat back module to the frame may comprise extending a head restraint bezel through the back carrier and the back frame.

The process may comprise the step of assembling a rear enclosure to the back frame. The step of assembling a rear enclosure to the back frame may comprise sliding an edge of the rear enclosure into a channel of the back carrier.

The step of coupling the seat back module to the frame may comprise closing a zipper of the back trim cover to enclose a back side of the seat.

### BRIEF DESCRIPTION OF THE DRAWINGS

Fig. 1 is a schematic perspective front view of a vehicle;
Fig. 2 is a schematic perspective front view of a seat;
Fig. 3 is a schematic perspective rear view of the seat;
Fig. 4 is a schematic perspective view of a frame for the seat;
Fig. 5 is a schematic perspective view of the frame with components;
Fig. 6 is a schematic perspective view of the frame with components;
Fig. 7 is a schematic perspective view of the frame with a seat cushion module;
Fig. 8 is a schematic perspective view of the frame with a back cushion module;
Fig. 9 is a schematic perspective view of the frame with a headrest and rear enclosure;
Fig. 10 is a schematic perspective view of a component of a seat cushion module;
Fig. 11 is a schematic perspective view of a component of a seat cushion module;
Fig. 12 is a schematic top view of the component of Fig. 11;
Fig. 13 is a schematic side view of a seat cushion module;
Fig. 14 is a schematic perspective view of a detail of Fig. 13;
Fig. 15 is a schematic perspective view of a detail of Fig. 13;

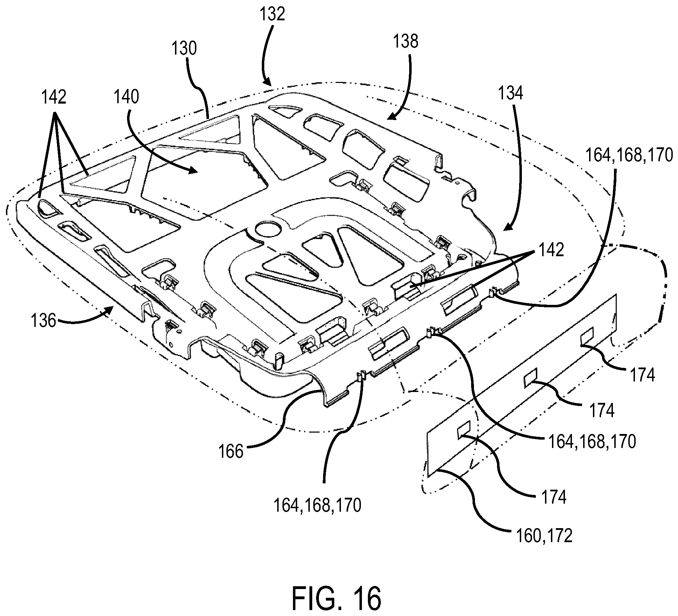

Fig. 16 is a schematic perspective view of features of a seat cushion module;
Fig. 17 is a schematic perspective view of a seat cushion module;
Fig. 18 is a schematic perspective view of a seat cushion module;
Fig. 19 is a schematic perspective view of a seat cushion module;
Fig. 20 is a schematic perspective view of a seat cushion module being connected to a seat frame;
Fig. 21 is a schematic side view of a seat cushion module being connected to a seat frame;
Fig. 22 is a schematic side view of a seat cushion module connected to a seat frame;
Fig. 23 is a schematic view of a seat cushion module connected to a seat frame;
Fig. 24 is a schematic view of a seat cushion module connected to a seat frame;
Fig. 25 is a schematic view of a seat cushion module connection feature with the seat frame;
Fig. 26 is a schematic view of a seat cushion module connection feature with the seat frame;
Fig. 27 is a schematic view of a seat cushion module;
Fig. 28 is a schematic view of a seat cushion module;
Fig. 29 is a schematic view of a seat cushion module connected to a seat frame;
Fig. 30 is a schematic view of seat cushion module connected to a seat frame;
Fig. 31 is a schematic side view of a seat cushion module;
Fig. 32 is a schematic detail from Fig. 31;
Fig. 33 is a schematic side view of a seat cushion module;
Fig. 34 is a schematic detail from Fig. 33;
Fig. 35 is a schematic perspective view of a seat cushion module and a seat frame;
Fig. 36 is a schematic perspective view of a seat cushion module and a seat frame;
Fig. 37 is a schematic perspective view of a seat cushion module and a seat frame;
Fig. 38 is a schematic side view of a seat cushion module;
Fig. 39 is a schematic side view of a seat cushion module;
Fig. 40 is a schematic perspective view of a seat back module;
Fig. 41 is a schematic rear perspective view of a seat back carrier;
Fig. 42 is a schematic front perspective view a seat back carrier;
Fig. 43 is a schematic side view of a seat back carrier;
Fig. 44 is a schematic perspective rear view of a seat back carrier;
Fig. 45 is a schematic perspective rear view of a seat back carrier;
Fig. 46 is a schematic perspective rear view of a seat back carrier;
Fig. 47 is a schematic perspective view of a seat back frame, a seat cushion module and a seat frame;
Fig. 48 is a schematic perspective view of a portion of a seat back frame;
Fig. 49 is a schematic perspective view of a seat back frame, a seat cushion module and a seat frame;
Fig. 50 is a schematic perspective view of a portion of a seat back frame;
Fig. 51 is a schematic perspective rear view of a portion of a seat back frame and seat back carrier;
Fig. 52 is a schematic perspective rear view of a portion of a seat back frame and seat back carrier;
Fig. 53 is a schematic side view of a seat back frame, a seat back carrier, a seat cushion module and a seat frame;
Fig. 54 is a schematic side view of a seat back frame, a seat back carrier, a seat cushion module and a seat frame;
Fig. 55 is a schematic perspective rear view of a seat back frame, a seat back carrier and a seat cushion module;
Fig. 56 is a schematic perspective rear view of a seat back frame and a seat back carrier;
Fig. 57 is a schematic perspective rear view of a seat back frame and a seat back carrier;
Fig. 58 is a schematic top view of a seat back frame and a seat back carrier;
Fig. 59 is a schematic perspective rear view of a seat back frame and a seat back carrier;
Fig. 60 is a schematic perspective rear view of a seat back frame and a seat back carrier;
Fig. 61 is a schematic perspective rear view of a seat back frame and seat back carrier;
Fig. 62 is a schematic perspective rear view of a seat back frame and a seat back carrier;
Fig. 63 is a schematic perspective rear view of a seat back frame, a seat back carrier and a headrest assembly;
Fig. 64 is a schematic perspective lower view of a seat cushion module;
Fig. 65 is a schematic perspective lower view of a seat cushion module and seat frame;
Fig. 66 is a schematic perspective lower view of a seat cushion module and seat frame;
Fig. 67 is a schematic perspective lower view of a seat cushion module, seat frame and seat back module;
Fig. 68 is a schematic perspective front view of a rear enclosure;
Fig. 69 is a schematic perspective rear view of a rear enclosure for a seat back module;
Fig. 70 is a schematic perspective rear view of a rear enclosure for a seat back module;
Fig. 71 is a schematic perspective top view of a rear enclosure for a seat back module;
Fig. 72 is a schematic perspective cutaway view of a seat back module;
Fig. 73 is a schematic upper cutaway view of a seat back module;
Fig. 74 is a schematic side view of a seat;
Fig. 75 is a schematic rear review of a seat; and
Fig. 76 is a schematic rear view of a seat.

### DETAILED DESCRIPTION

It is to be understood that the system and method may assume various alternative orientations and step sequences, except where expressly specified to the contrary. It is also to be understood that the specific system and method illustrated in the attached drawings and described in the following specification are simply exemplary embodiments. Hence, specific dimensions, directions or other physical characteristics relating to the embodiments disclosed are not to be considered as limiting.

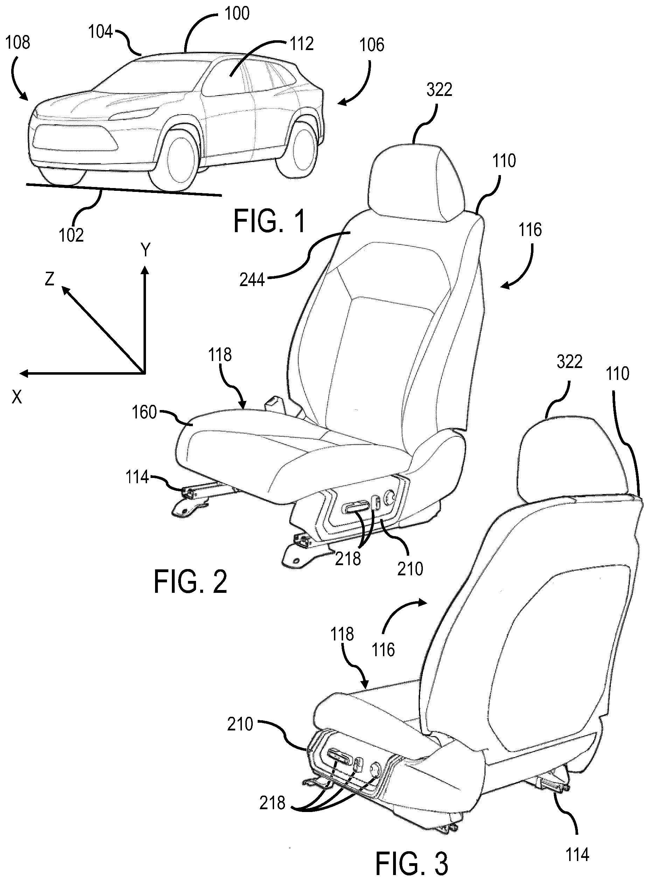

Fig. 1 schematically depicts a vehicle 100, such as a motor vehicle. While one vehicle 100 is depicted, vehicles of other shapes, sizes and configurations may be used.

A coordinate system is provided where an X direction is generally associated with the forward direction of the vehicle 100; the X direction may also be associated with the longitudinal axis of the vehicle 100. A Y direction may be associated with a direction transverse the X direction such as extending vertically from a ground surface 102 through a roof 104 of the vehicle 100. A Z direction may be transverse both the X and Y directions and may extend laterally from one side of the vehicle 100 to the other side of the vehicle 100, such as laterally from a road side 106 to a curb side 108 of the vehicle 100.

One or more seats 110, such as schematically depicted in Figs. 2 and 3, may be located on an interior 112 of the vehicle 100. Any number of seats 110 in any location and/or orientation may be located on the interior 112. The seats 110 may be located facing the forward direction but other directions are permissible.

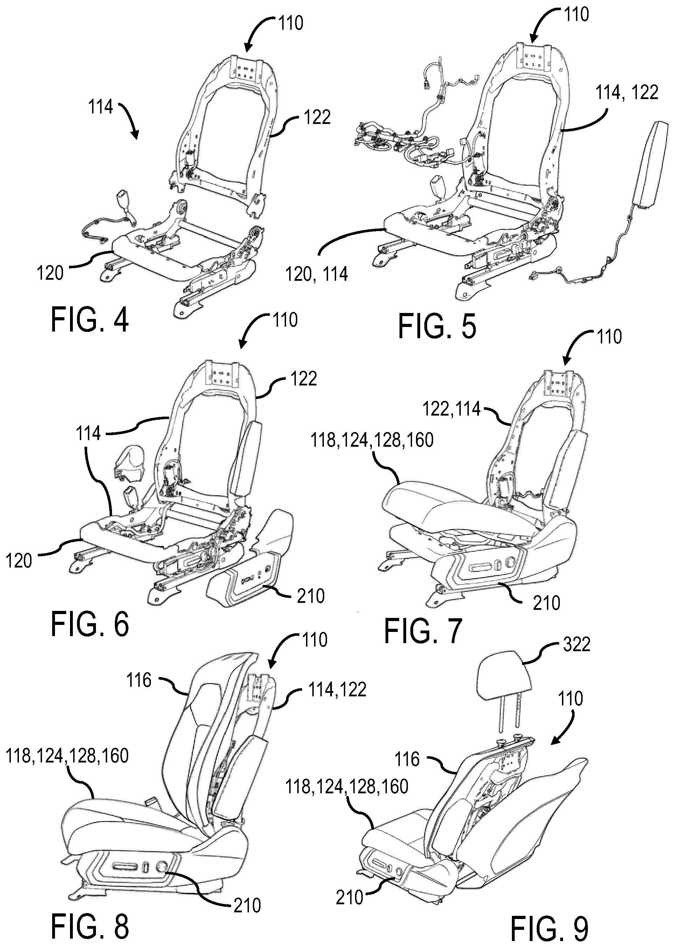

As schematically depicted in Figs. 2-9, the seat 110 may have a frame 114, a seat back module 116 and a seat cushion module 118. The frame 114 may be comprised of a seat frame 120 that supports the seat cushion module 118 and a back frame 122 that supports the back module 116. The seat frame 120 and the back frame 122 may be movably coupled together.

As schematically depicted in Figs. 2, 3, and 7-12, the seat cushion module 118 may comprise a cushioning member 124. The cushioning member 124 may be comprised of one or more padding materials 126 covered by one or more trim pieces 128. An example of a padding material 126 is foam. A trim piece 128 may be man-made and/or natural, such as leather.

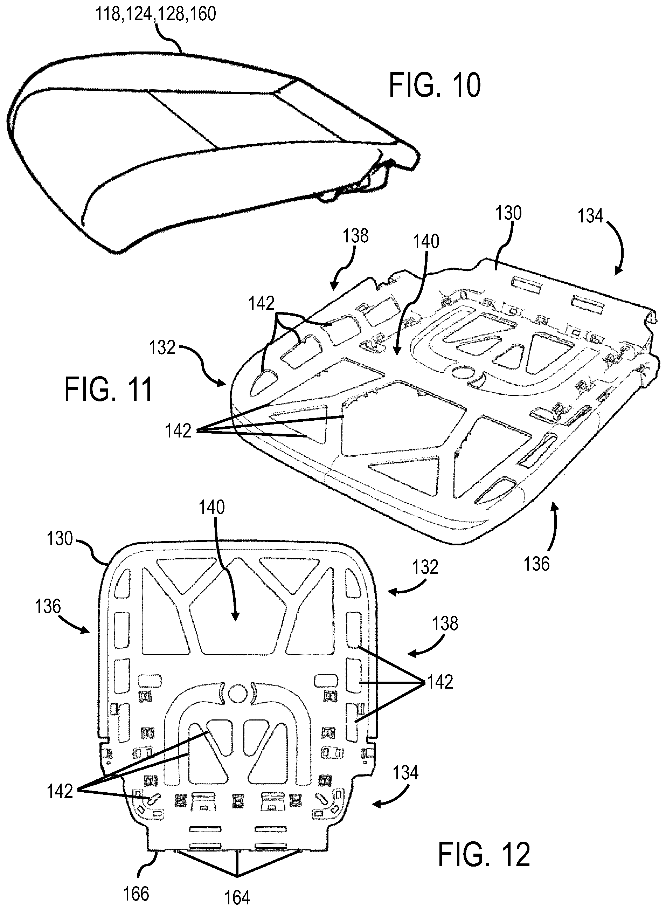

In some cases, a cushion carrier 130, which is schematically depicted in Figs. 11-12, may be part of the cushioning member 124, or the cushion carrier 130 may entirely comprise the cushioning member 124.

The cushion carrier 130 may be a single, one-piece component; however, it may be a multi-piece component. In certain embodiments, cushion carrier 130 may be configured with a size and shape to cooperate with the seat frame 120.

The cushion carrier 130 may be formed of a polymeric material. The polymeric material may comprise a nylon, a Reinforced Nylon, a PA6 material or a polypropylene material. The cushion module 118 may comprise a spring or biasing member to provide suspension for the seat 110. The spring or biasing member may form a connection from the cushion carrier 130 to the seat frame 120.

The cushion carrier 130 may be formed of an elastomeric material such as a thermoplastic elastomer (TPE) material. Various types of TPE material may be employed such as at least one of a styrenic block copolymer, thermoplastic olefinic elastomer, and/or thermoplastic vulcanizate.

The cushion carrier 130 may provide conforming support that flexes with the size, shape and/or posture of the occupant and accommodates differently sized occupants with less need for active adjustments. In certain embodiments, the cushion carrier 130 may have a flexural modulus in a range of about 200 MPa to about 800 MPa, preferably about 290 MPa, and a tensile modulus in a range of about 10 MPa to about 300 MPa, preferably about 280 MPa. The cushion carrier 130 may be formed from any suitable material having a desired flexural modulus. The cushion carrier 130 may be formed by any suitable method as desired such as an injection molding process, a thermoforming process, a compression molding process, a blow molding process, a vacuum casting process, a three-dimensional printing process, and the like.

The cushion carrier 130 may exhibit both thermoplastic and elastomeric properties which permit flexibility while militating against a permanent set thereof. As such, the cushion carrier 130 has the ability to stretch to moderate elongations and return to an original shape.

The cushion carrier 130 may be relatively thin compared to commonly known structures. A thickness of the cushion carrier 130 may be in a range of about 1 mm to about 5 mm, preferably in a range of about 1.5 mm to about 3.0 mm, and more preferably about 2 mm or less.

The cushion carrier 130 may function alone as both a suspension for the seat cushion module 118 and as well as a structural component for the module 118. For example, it may be that other springs or biasing members are not required with the module 118 to provide a suspension for the seat 110. Further, it may be that no other wire seat support structures or structural members are required for connection of the cushion carrier 130 the seat frame 120.

The cushion carrier 130 may have a front portion 132, a rear portion 134, a first side portion 136 and a second side portion 138. The cushion carrier 130 may also include a main support portion 140 formed between the front and rear portions 132, 134 and between the first and second side portions 136, 138.

The cushion carrier 130 may have slots 142 extending entirely or partially through the thickness of the carrier 130. The slots 142 may be in any number and have any shape, size, and configuration as desired. The slots 142 may be located at predetermined locations and in any number to tune the cushion carrier 130 to the application. For example, the slots 142 might be used to control at least one of rigidity/flexibility, shape, and conformability of the cushion carrier 130. Further, the slots 142 might be used to increase or decrease the flexibility of the cushion carrier 130 and/or increase an airflow through and around the cushion carrier 130 for the comfort of the occupant. The cushion carrier 130 may be attached to the seat frame 120 or components thereof, such as a seat pan 144.

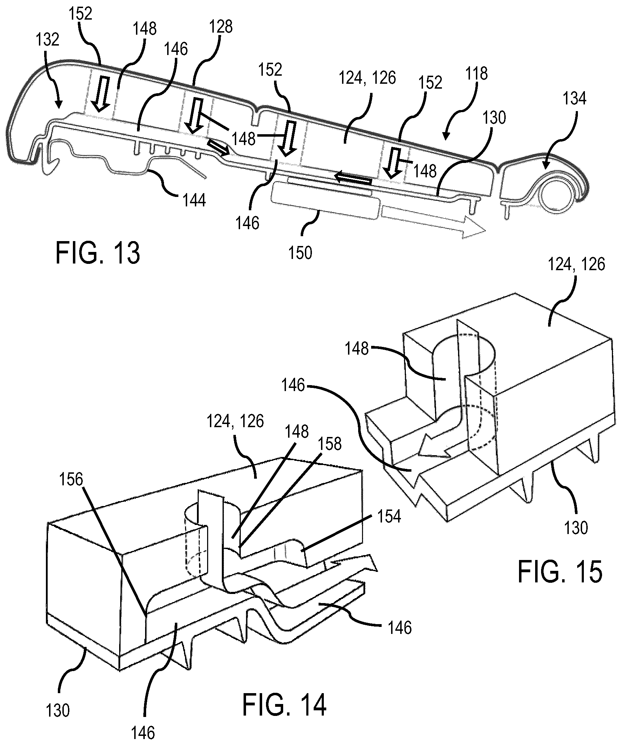

The cushion carrier 130 may assist in forming one or more channels 146 configured to facilitate airflow as schematically depicted in Figs. 13-15. The channels 146 may fluidly connect paths 148 in the cushioning member 124 with a fan 150. The paths 148 may connect with apertures 152 in the trim pieces 128.

The cushion carrier 130 may comprise a reinforcement 154 between the apertures 152 and the channel 146. The reinforcement 154 may comprise a felt material. The reinforcement 154 may extend about the path 148 in the foam material. The reinforcement 154 may be formed to have a complementary size and shape to the path 148. The path 148 may comprise a first section 156 and a second section 158 where the first section 156 is larger and below than the second section 158. The reinforcement 154 may be located in at least the first section 156. The reinforcement 154 may extend continuously about the path 148 in a substantially constant thickness.

The channel 146 may be formed between the cushioning member 124 and the cushion carrier 130. The path 148 and apertures 152 may be fluidly connected to the channel 146, such as located above it. The apertures 152 may comprise a set of perforations adjacent the path 148 configured to facilitate airflow. Air may flow in either direction from the apertures 152, the path 148, the channel 146 and the fan 150. The fan 150 may be located under the cushion carrier 130.

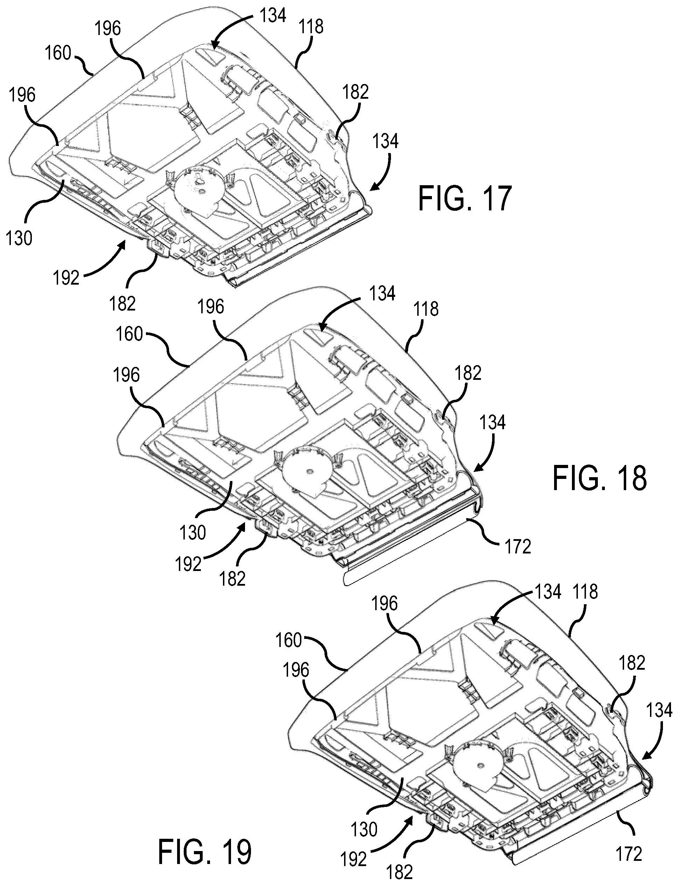

As schematically shown in at least Figs. 17-19, the cushion carrier 130 may comprise a feature configured to align a seam of the trim pieces 128, which may comprise a cushion and trim cover 160 with a seam of other trim pieces 128, which may comprise a back trim cover 162.

The feature of the cushion carrier 130 may comprise a projection 164 on a rear wall 166 of the cushion carrier 130 configured to retain the cushion trim cover 160. The projection 164 may be such as at least one tooth. The projection 164 may comprise at least one pair of teeth. The at least one pair may be several pairs of teeth. The pairs of teeth may be horizontally aligned with one another on the rear wall 166 of the cushion carrier 130. Each pair may comprise two elastic arms 168 extending transverse from the rear wall 166 of the cushion carrier 130. Barbs, or hooks, 170 may be formed on the ends of the arms 168.

The cushion trim cover 160 may comprise a strip 172 comprising at least one aperture 174 configured to snap on projection 164 in the rear wall 166 of the cushion carrier 130. The strip 172 may comprise a plurality of horizontally aligned apertures 174 adapted to receive the projection 164. The strip 172 may comprise a J-strip configured to clip the cushion trim cover 160 to the cushion carrier 130, the steps of which are schematically depicted in Figs. 18-19.

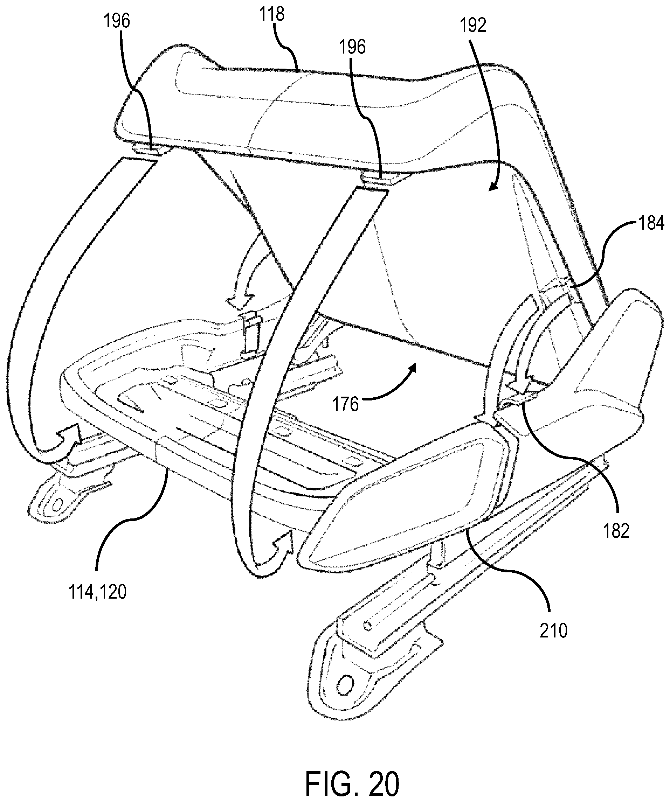

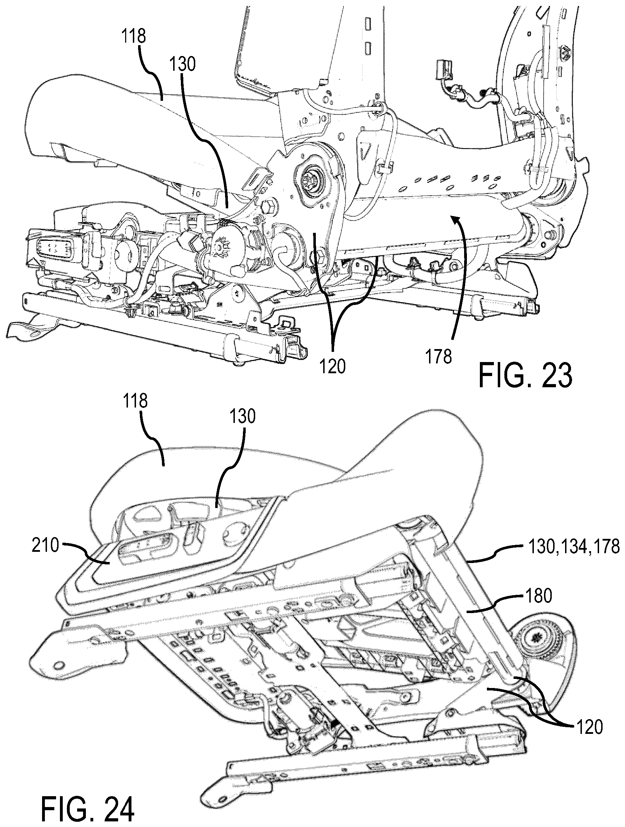

Figs. 20-34 schematically depict an installation of the seat cushion module 118 on the seat frame 120. Initially, a rear portion 176 of the seat cushion module 118 may be attached to the seat frame 120. More particularly, the rear portion 134 of the cushion carrier 130 may have a frame connection member 178. The frame connection member 178 may have at least a partial complementary shape to an adjacent portion of the seat frame 120.

In some embodiments, the seat frame 120 adjacent the rear portion 134 of the cushion carrier 130 may be such as a tube, or a bar, 180. It may be preferable that at least a portion of the frame connection member 178 has a complementary shape to the tube, or bar, 180.

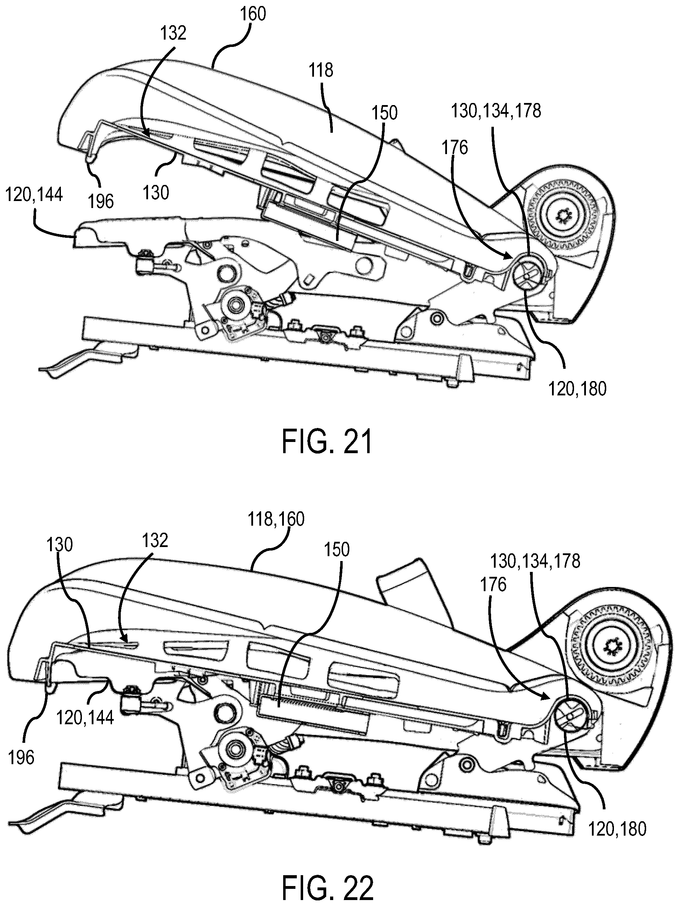

As schematically shown in Figs. 21-24, at least a portion of the frame connection member 178 may have a generally circular cross-section. The rear portion 134 of the cushion carrier 130 may have at least a partial circular cross-section that is complementary to the frame connection member 178. The rear portion 134 of the cushion carrier 130 may be pushed onto the frame connection member 178. The flexible nature of the cushion carrier 130 allows it to initially expand to accommodate the full diameter of the frame connection member 178, as schematically shown in Fig. 21, and then the cushion carrier 130 elastically returns to its original shape about the frame connection member 178, as schematically shown in Fig. 22. The elastic nature of the cushion carrier 130 may selectively secure it to the frame connection member 178 permitting the cushion carrier 130 to be removed for repair, maintenance or simply if a different cushion carrier 130 and/or seat cushion module 118 are desired. The connection between the cushion carrier 130 and the frame connection member 178 may be such as a snap fit connection.

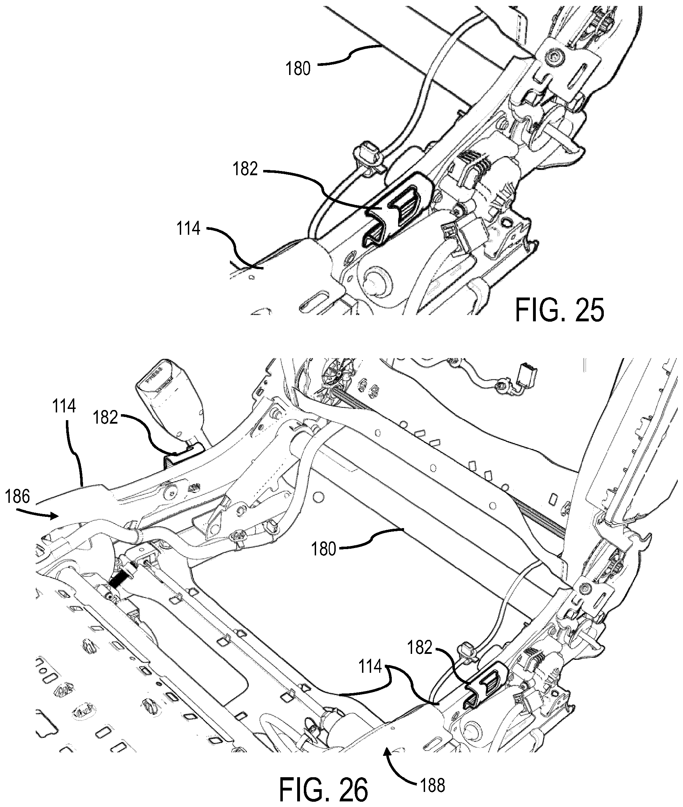

At least one receptacle 182 may be connected to the seat frame 114. The at least one receptable 182 may also be used to selectively connect the seat cushion module 118 to the seat frame 114. As schematically shown in at least Figs. 25 and 26, the at least one receptacle 182 may comprise a portion of a clip. The receptacle 182 may comprise two clips on either side of the seat frame 114. The clips may be H-point clips. The clips may be longitudinally aligned with one another on the seat frame 114.

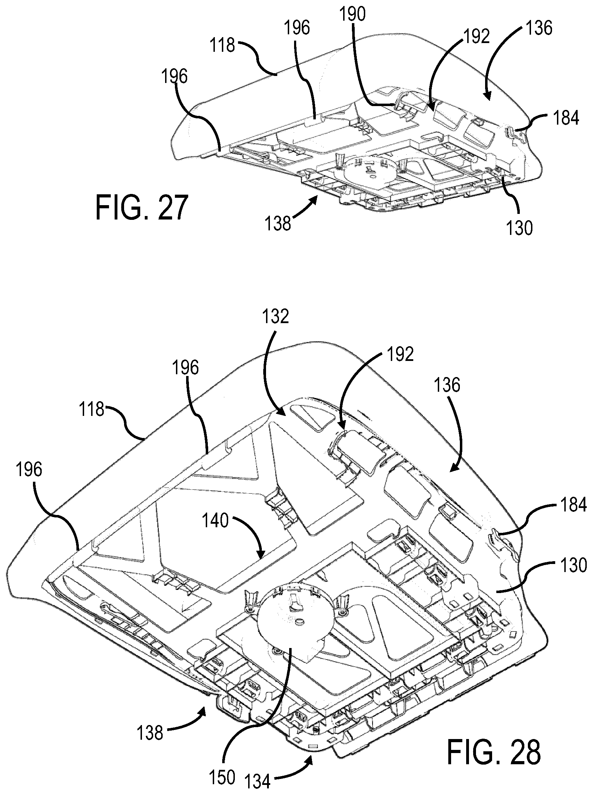

The cushion carrier 130 may comprise an attachment 184 configured to selectively attach to the receptable 182. The attachment 184 may comprise a one-piece, unitary attachment integrally formed with the cushion carrier 130. The connection between the receptacle and the attachments may be such as a male-female connection where the receptacle 182 receives a portion of the attachment 184 therein. The connection may be a snap-fit connection. The receptacle 182 may comprise a left receptacle 182 on a left side 186 of the seat frame 114 and a right receptable 182 on a right side 188 of the seat frame 114. The attachment 184 may comprise a left attachment 184 on the first side portion 136 of the cushion carrier 130, as shown in Figs. 27-29, and a right attachment 184 on the second side portion 138 of the cushion carrier 130. The left attachment 184 may selectively fit with the left receptable 182 and the right attachment 184 may selectively fit with the right receptable 182. The attachments/receptables 184, 182 may be selectively separable from one another so that the seat cushion module 118 can be removed from the cushion carrier 130. The attachments/receptacles 184, 182 may be configured to align the seat cushion module 118 with the seat frame 114.

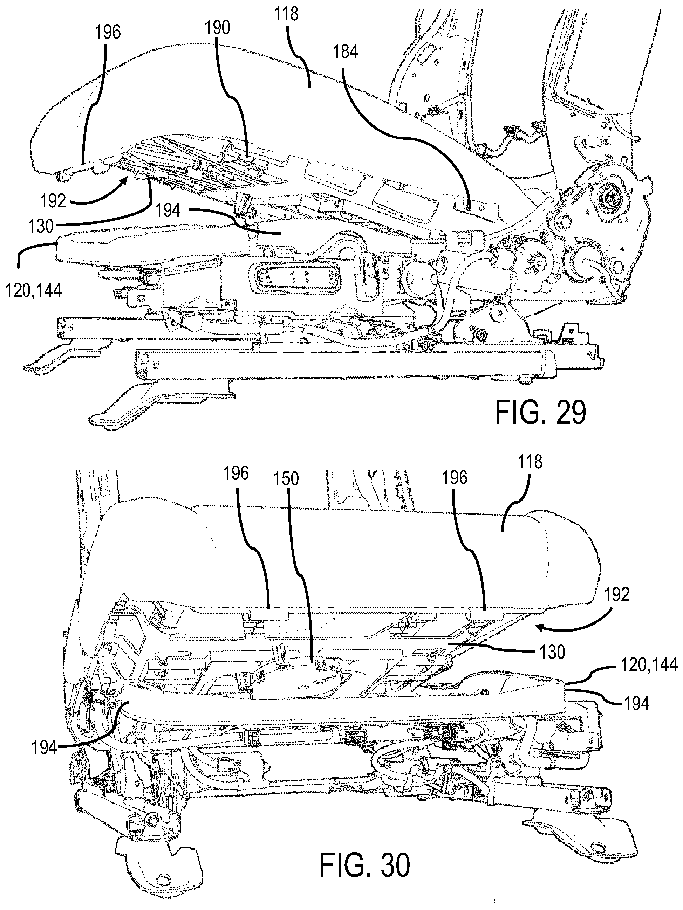

The seat cushion module 118 may comprise at least one alignment feature 190 on an underside 192 of the cushion carrier 130 as schematically shown in at least Figs. 27 and 29. The alignment feature 190 may comprise at least one of (a) a rib; (b) a flange; (c) a stand-off; and (d) a snap attachment. The alignment feature 190 may be configured to engage a side member 194 of the seat frame 114 to assist in aligning the seat cushion module 118 with the seat frame 114. The alignment feature 190 may comprise a one-piece, unitary tab integrally formed with the cushion carrier 130. There may be two alignment features 190 on the first and second sides portions 136, 138 of the cushion carrier 130. The alignment features 190 maybe longitudinally aligned with one another; the alignment features 190 may be substantially the same shape, size and location.

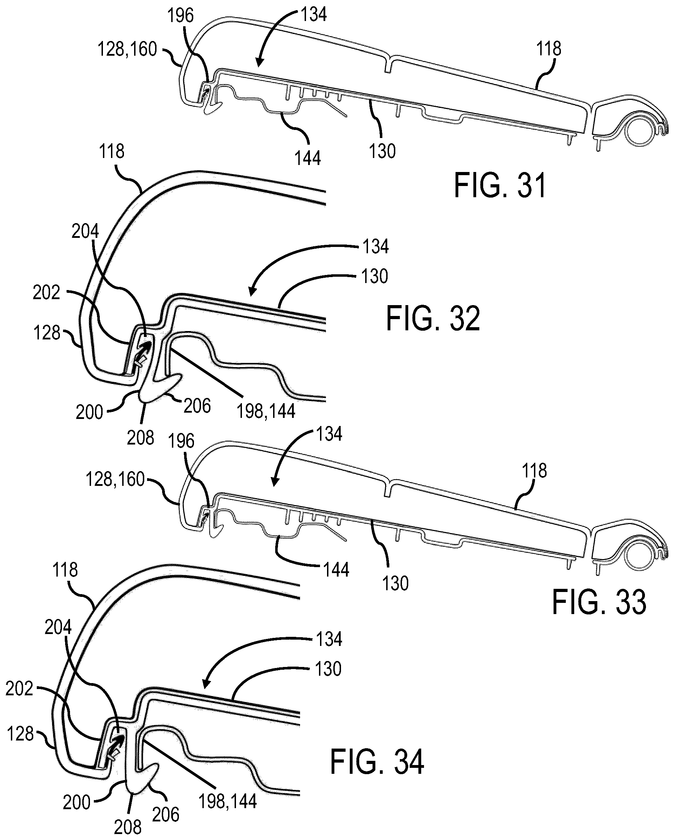

As schematically shown in at least Figs. 31-34, the seat cushion module 118 may comprise a front attachment structure 196. The front attachment structure 196 may be part of the cushion carrier 130; it may be located on the front portion 132 of the cushion carrier 130. The front attachment structure 196 may be one-piece, unitary and integrally formed with the cushion carrier 130.

The front attachment structure 196 may be such as a hook that selectively attaches to a front rim 198 of the seat pan 144. The front rim 198 of the seat pan 144 may extend generally vertically downwardly generally transverse the primary longitudinal direction of the cushion carrier 130.

The front attachment structure 196 may comprise a generally vertically downwardly extending first leg 200. The first leg 200 may extend from the cushion carrier 130. The first leg 200 may extend generally parallel to the front rim 198. The first leg 200 may extend generally laterally the width of the front rim 198, or only sections thereof. The first leg 200 may extend generally parallel a trim attachment leg 202, which may also be one piece, unitary and integrally formed with the cushion carrier 130. A gap 204 may extend between the trim attachment leg 202 and the first leg 200 so that trim pieces 128 from the seat cushion module 118 can be secured to the trim attachment leg 202.

The front attachment structure196 may also comprise a second leg 206. The second leg 206 may extend from an end portion 208 of the first leg 200. The second leg 206 may extend at an angle from the first leg 200, such as between approximately 30-60 degrees from vertical. The second leg 206 may extend longitudinally rearwardly from the first leg 200. The second leg 206 thus forms a hook with the first leg 200.

The first and/or second leg 200, 206 may be flexed or biased about the front rim 198 as shown in Fig. 32. The elastic nature of the leg/legs 200, 206 permits the front attachment structure 196 to selectively snap onto the front rim 198 to secure the cushion carrier 130 to the seat pan 144 and/or the seat frame 120.

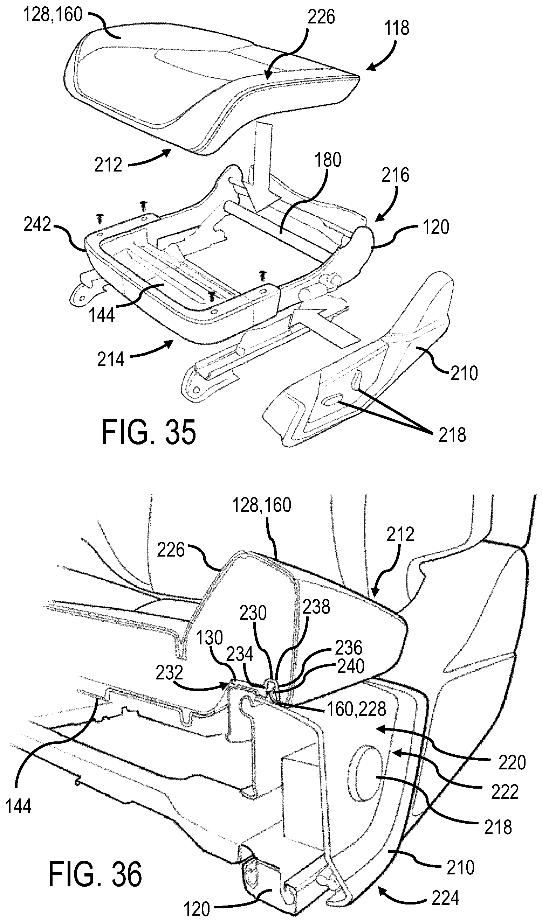

The seat cushion module 118 may comprise at least one side shield 210 as schematically depicted in Figs. 35-39. The at least one side shield 210 may also be a separate component, such as part of the seat frame 120. While a single side shield 210 on one side portion 212 of the seat cushion module 118 is depicted and described, the description may be readily applied to a side shield 210 on the opposite side of the module 118.

The side shield 210 may continuously extend from a forward portion 214 of the seat frame 120, which may include the seat pan 144, to a rear portion 216 of the seat frame 120, such as adjacent the rear frame tube 180. The side shield 210 may cover at least the seat frame 120 to provide an aesthetically pleasing enclosure to the seat 110. The side shield 210 may also provide a presentation surface for various seat controls 218.

The side shield 210 may be constructed of an elastic material such as plastic or the like. The side shield 210 may be one piece, unitary and integrally formed. The side shield 210 may have an upper portion 220, a middle portion 222 and a lower portion 224. The upper portion 220 may laterally extend generally transverse the middle portion 222. The upper portion 220 may extend laterally under the seat cushion module 118, such as under a side bolster portion 226 of the seat cushion module 118.

As schematically depicted in at least Fig. 36, an edge portion 228 of the cushion trim cover 160 may be located between the upper portion 220 of the side shield 210 and the cushion carrier 130. The cushion carrier 130 may have a trim groove 230 in an outer perimeter portion 232 of the cushion carrier 130. The trim groove 230 may be one piece, unitary and integrally formed with the cushion carrier 130. The trim groove 230 may be such as U-shaped where the U opens downwardly toward the upper portion 220 of the side shield 210. The U may comprise an inner leg 234 and an outer leg 236 connected by a base portion 238. The groove 230 may receive the edge portion 228 of the cushion trim cover 160 therein. The edge portion 228 of the cushion trim cover 160 may be wrapped around the outer leg 236. One of the inner or outer legs 234 or 236 may have a retention feature 240, such as a tab, to selectively retain the edge portion 228 therein.

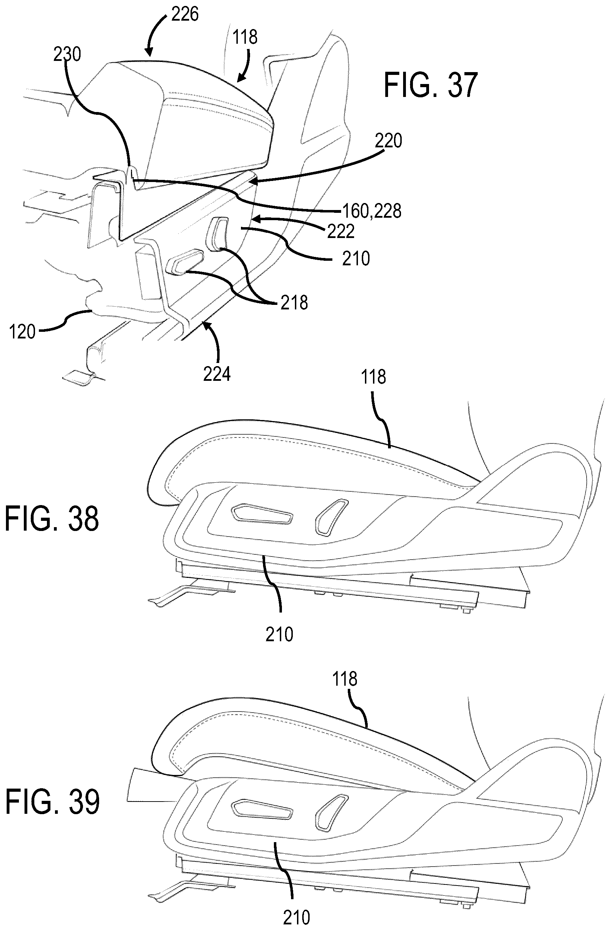

As schematically shown in Figs. 38-39, the side shield 210 may generally physically and visually cover or block the seat frame 120 and seat mechanisms for the seat cushion module 118 even during movement of the seat cushion module 118. Fig. 38 schematically depicts the seat cushion module 118 in a lowered position. Fig. 39 schematically depicts the seat cushion module 118 in a raised position. In both positions, the internal mechanisms and/or structures of the seat 110 are generally blocked from view by the side shield 210. The side shield 210 also may remain stationary while the seat cushion module 118 changes position.

A gap skirt 242 may be attached to the seat pan 144 and/or seat frame 114 before the side shield 210 is installed. The gap skirt 242 may be U-shaped structure that extend at least about the front rim 198 of the pan 144. The gap skirt 242 may also extend rearwardly along the side members 194 of the seat frame 120. The gap skirt 242 provides an enclosing trim that blocks view of portions of the frame 120 and/or pan 144 from view.

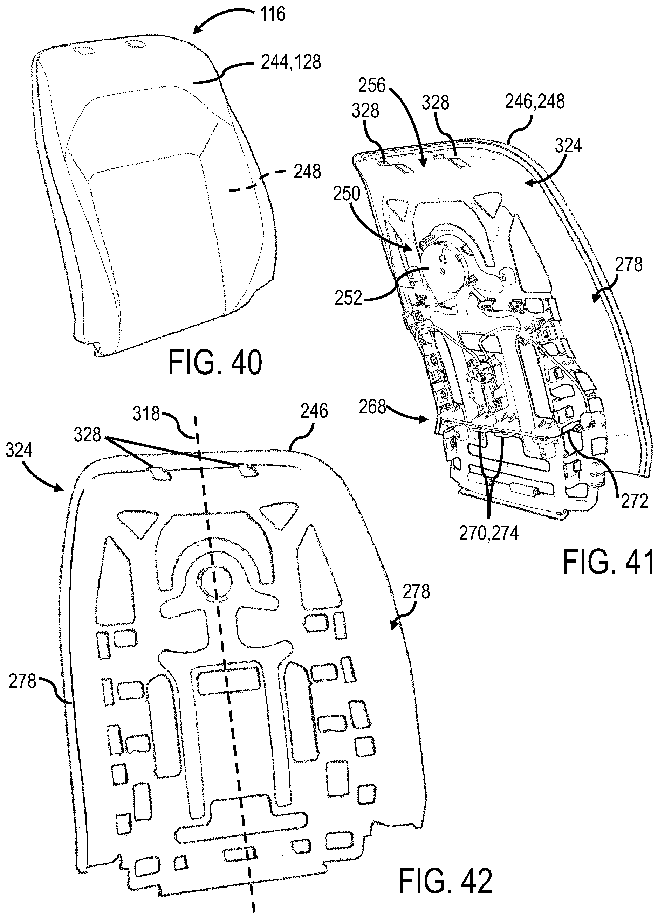

Figs. 40-42 schematically depict the seat back module 116. The seat back module 116 may comprise a seat back trim cover 244, comprised of the trim pieces 128 coupled to a back carrier 246.

The seat back module 116 may comprise a cushioning member 248, which may be as described for the seat cushion module 118. The back carrier 246 may be part of the cushioning member 248 or it may be the cushioning member 248.

The back carrier 246 may be a single, one-piece component; however, it may be a multi-piece component. In certain embodiments, the back carrier 246 may be configured with a size and shape to cooperate with the back frame 122. The back carrier 246 may be constructed as noted above for the cushion carrier 130 with regard to materials, features and functions in the seat 110.

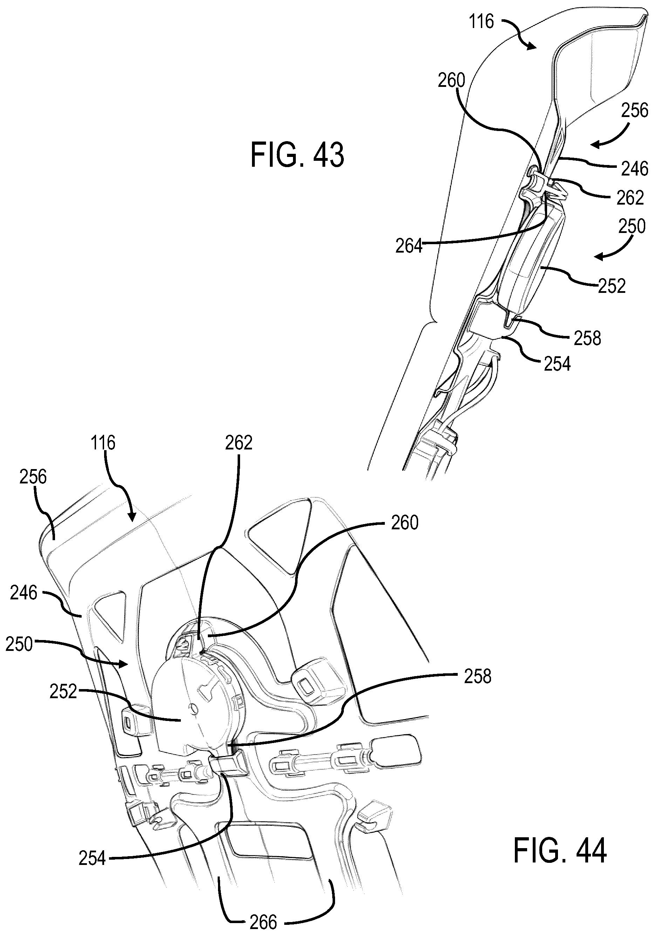

As schematically depicted in Figs. 41-44, the seat back module 116 may comprise an air distribution system 250. The system 250 may comprise an electric blower 252 attached to the back carrier 246; the back carrier 246 may be configured for attachment of the blower 252.

The back carrier 246 may comprise a cup 254 on a back side 256 of the back carrier 246 configured to retain a first tab 258 of the blower 252. A downwardly extending first tab 258 from the blower 252 may selectively extend into the upward opening cup 254 in the back carrier 246 to be secured therein.

The back carrier 246 may also comprise a clip 260 on the back side 256 of the back carrier 246 configured to retain a second tab 262 of the blower 252. The clip 260, which may have an arrow-shaped portion, may extend through an aperture 264 in the second tab 262 to selectively secure the clip 260 to the second tab 262. The connection may be such as a snap fit. The cup 254 and the clip 260 may be one piece, unitary and integrally formed with the back carrier 246. The first tab 258 and the aperture 264 may be on opposite sides of the blower 252 from one another. The clip 260 and the cup 254 may be positioned on the back side 256 of the back carrier 246 in a complementary position for the aperture 264 and the tab 258. The blower 252 may be attached to air conduits 266 to distribute air to, or draw air from, various parts of the seat back module 116 and/or seat cushion module 118.

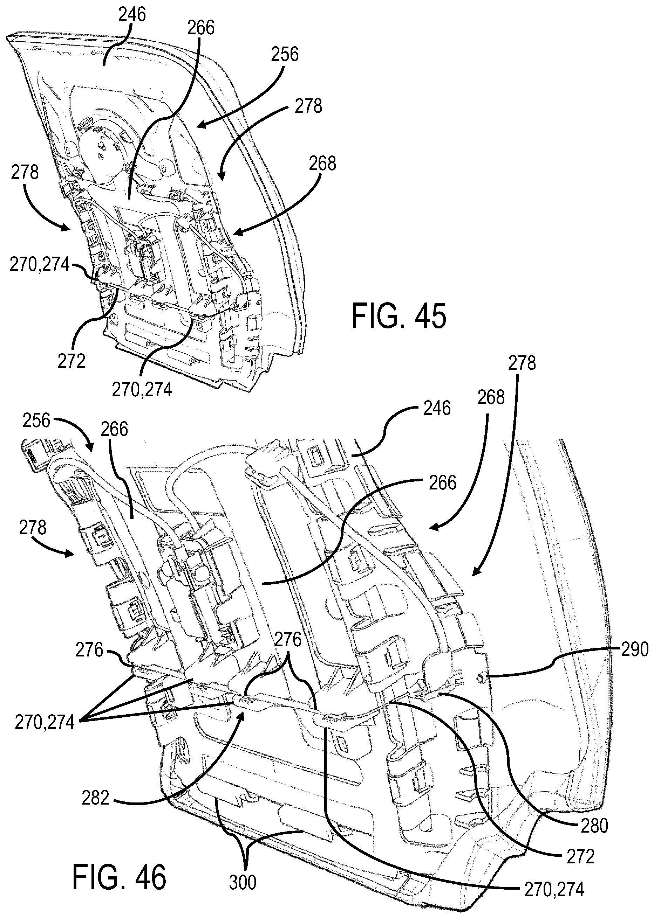

Figs. 45-46 schematically depict a lumbar system 268 for the back carrier 246. The system 268 may comprise a housing 270 configured for routing a wire 272 of the lumbar system 268. The housing 270 may be one piece, unitary and integrally formed with the back carrier 246. The housing 270 may be comprised of posts 274 extending from the back side 256 of the back carrier 246. The posts 274 may have wire-ways 276 on their outermost surfaces that are adapted to receive and support the wire 272 therein. The posts 274 may be generally horizontally aligned with one another across the back carrier 246.

The wire 272 may terminate on either of two side portions 278 of the back carrier 246 with an attachment portion 280, such as a hook. The attachment portion 280 may anchor the wires 272 to the back carrier 246 to draw a middle portion 282 of the wire into or out of the back carrier 246 to provide lumbar support

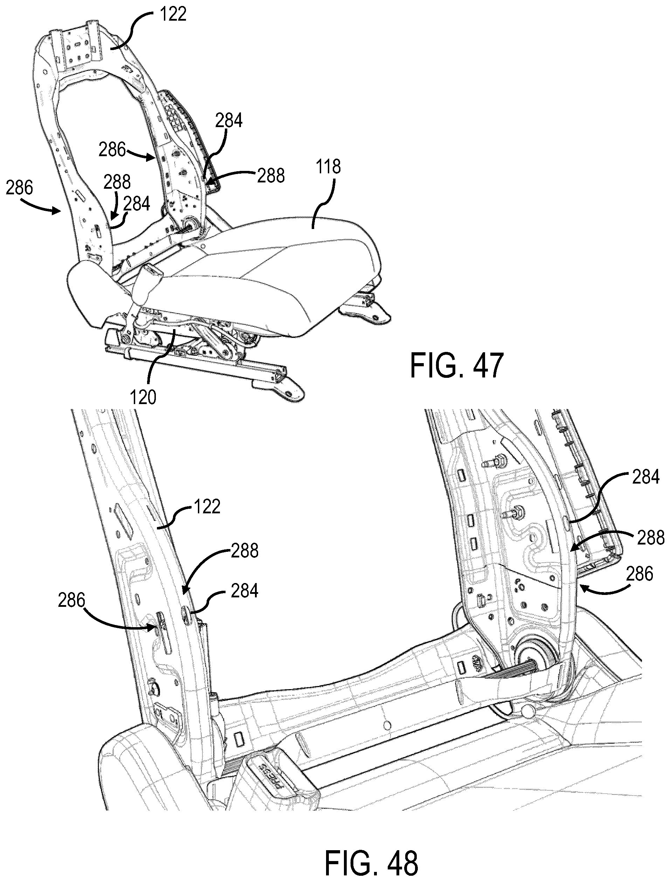

As schematically depicted in Figs. 47-48, the back frame 122 may have at least one aperture 284 therein. The at least one aperture 284 may be located in a bolster portion 286 of the back frame 122. The aperture 284 may be located in an outer, leading edge 288 of the bolster portion 286. The back carrier 246 may have at least one aperture engagement portion 290, such as a pin. The portion 290 may extend longitudinally rearwardly from the side portion 278 of the back carrier 246. The portion 290 may be adapted to be selectively received within the aperture 284. An aperture 284 and a portion 290 connection may assist with side-to-side alignment of the back carrier 246 with the back frame 122.

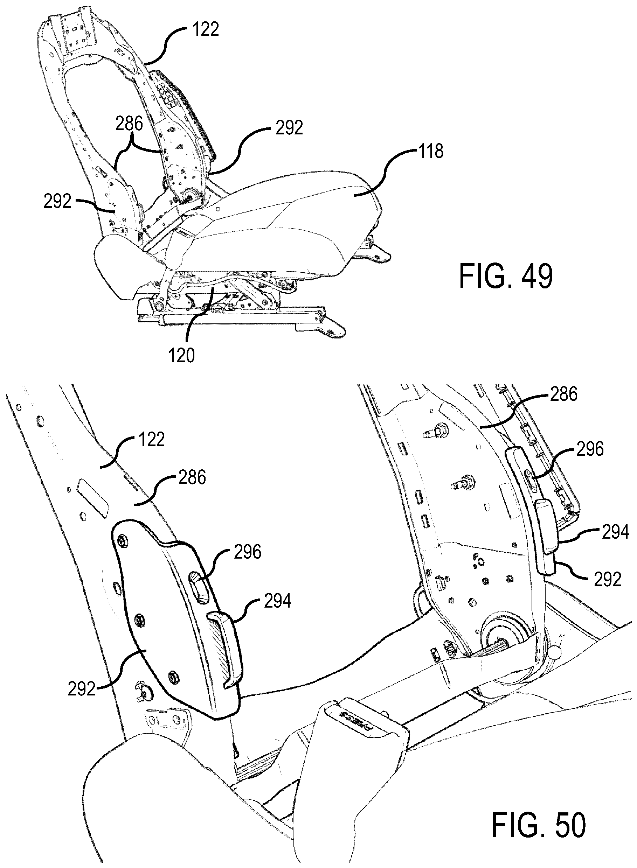

Figs. 49-50 schematically depict mounting portions 292 being attached to the bolster portions 286 of the back frame 122. The mounting portions 292 may have a complementary shape to at least part of the bolster portion 286 of the back frame 122. The mounting portions 292 may have cleats 294. The cleats 294 may be one piece, unitary and integrally formed with the mounting portions 292. The cleats 294 may provide additional mounting structure for the back carrier 246 for mounting the back carrier 246 to the back frame 122. The mounting portions 292 may also have apertures 296 that align with the portions 290 on the back carrier 246 mentioned above to secure the back carrier 246 to the back frame 122.

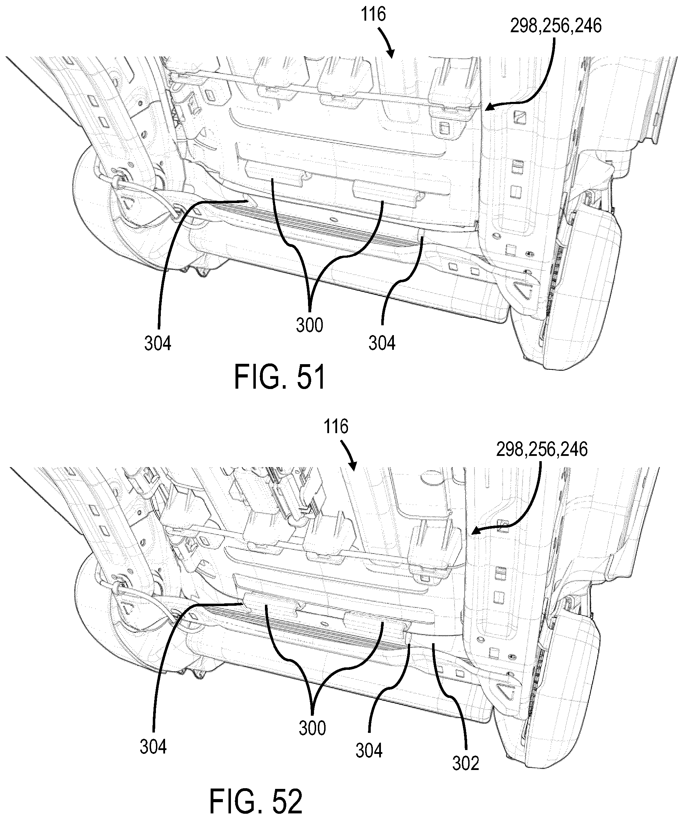

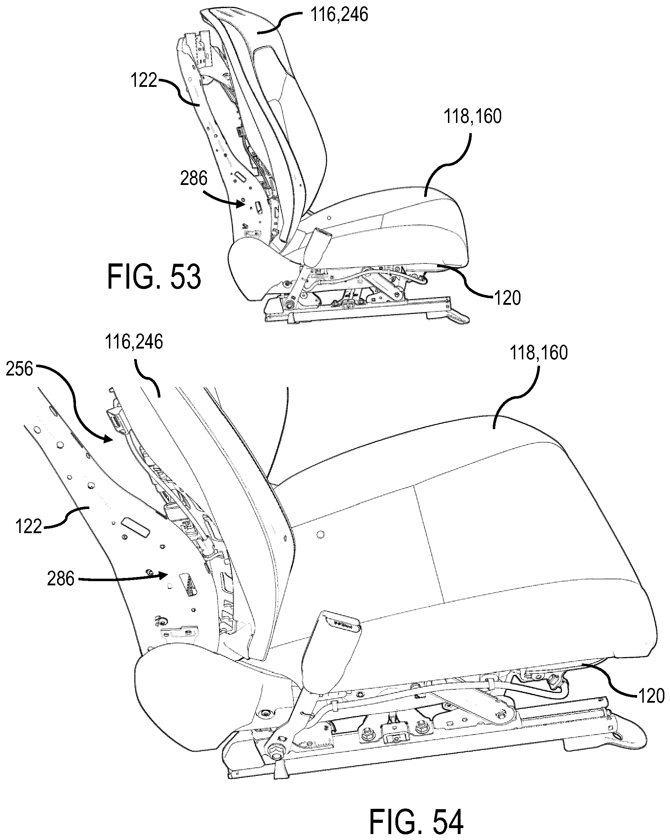

Figs. 51-52 schematically depict a lower portion 298 of the back side 256 of the back carrier 246. The back carrier 246 may comprise at least one clip 300 and the back frame 122 may comprise a lower cross member 302. The clip 300 may be one piece, unitary and integrally formed with the back carrier 246. The clip 300 may be configured to be selectively assembled to the lower cross member 302. The clip 300 may have a generally C shape cross-section having a complementary inside surface to at least a portion of an outside surface of the lower cross member 302. The clip 300 may elastically expand to extend over the lower cross member 302 and at least partially capture the lower cross member 302. The clip 300 may be configured to flex to facilitate rotation of the back carrier 246 about the lower cross member 302 during installation of the back carrier 246 to the back frame 122 as schematically shown in Figs. 53-54.

The back carrier 246 may comprise more than one clip 300. The clips 300 may be sized and shaped similar to one another and they may be longitudinally aligned with one another in the same horizontal plane for connection to the same lower cross member 302.

The lower cross member 302 may comprise an alignment feature 304 configured for alignment of the clip 300. The feature 304 may comprise at least one of (a) a marking; (b) a rib; (c) a projection on or adjacent the lower cross member 302. As schematically shown in Figs. 51-52, the alignment feature 304 may be at least one projection that is attached to or associated with the lower cross member. The feature 304 may be one piece, unitary and integrally formed with the lower cross member 302. The clip 300 may be adapted to abut the feature 304 to align the clip 300 into a desired position on the lower cross member 302. The clip 300 and/or the feature 304 may assist in vertical, lateral and/or longitudinal positioning the seat back module 116 on the lower cross member 302.

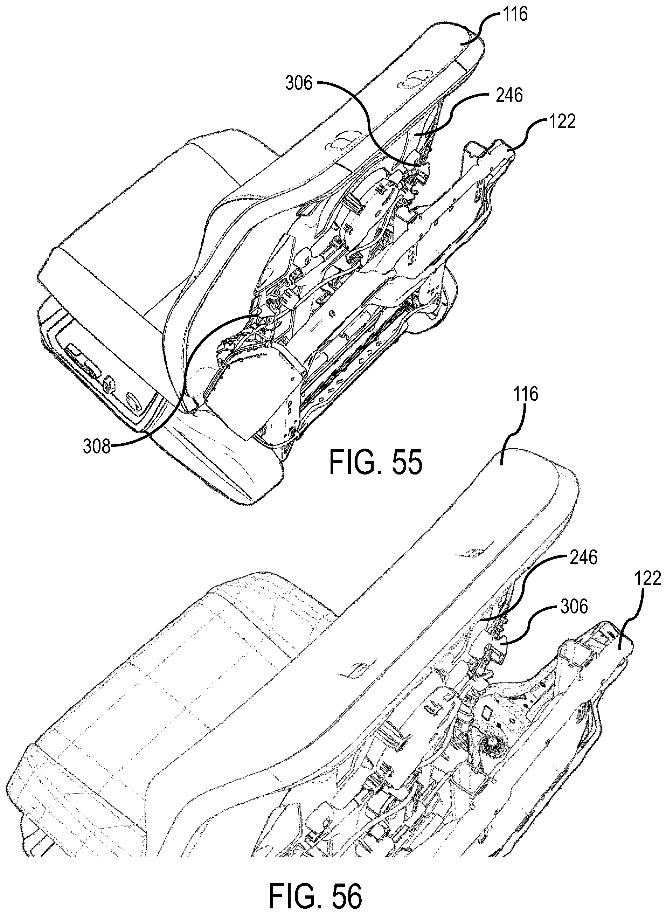

As schematically depicted in at least Figs. 55-59, the back carrier 246 may comprise at least a first tab 306. The back carrier 246 may also have a second tab 308. The tabs 306, 308 may be laterally aligned with one another on the back carrier 246. The tabs 306, 308 may be one-piece, unitary and integrally formed with the back carrier 246.

The tabs 306, 308 may have a base portion 310 and an engagement portion 312. The base portion 310 may connect and extend the tab 306, 308 away from the back side 256 of the back carrier 246. The engagement portion 312 may be such as wedge shaped or arrow shaped. The wedge may taper rearwardly from the side portion 278 of the back carrier 246.

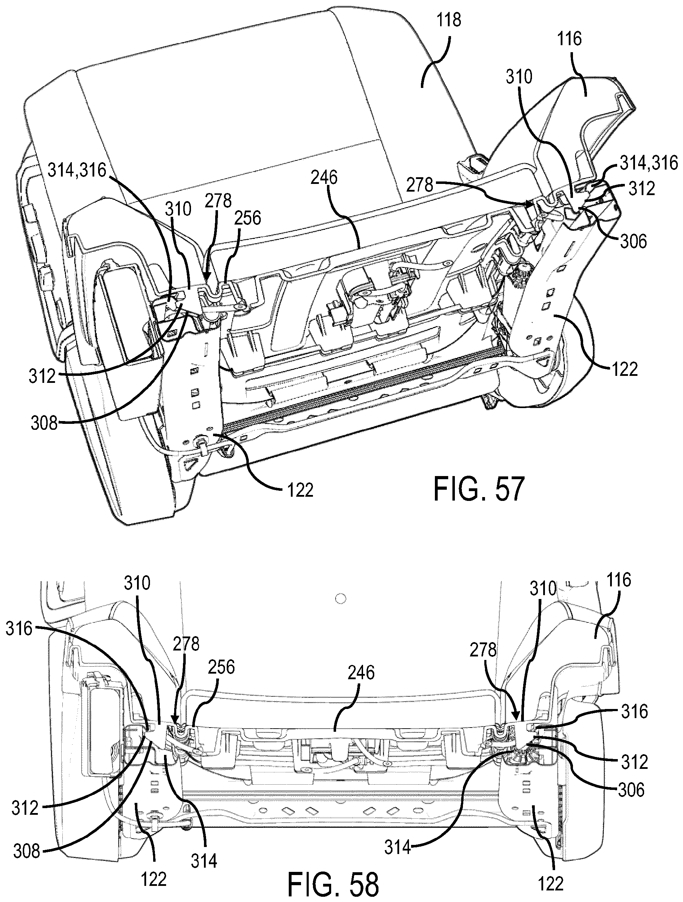

The tabs 306, 308 may be configured for a snap-fit connection to the back frame 122 as schematically shown in Figs. 57-58. The engagement portion 312 of the tabs 306, 308 may be selectively located within complementary shaped apertures 314 in the back frame 122. The engagement portion 312 of the tabs 306, 308 may be located in contact with an edge 316 of the aperture 314 where the edge 316 may be sufficient to retain the engagement portion 312.

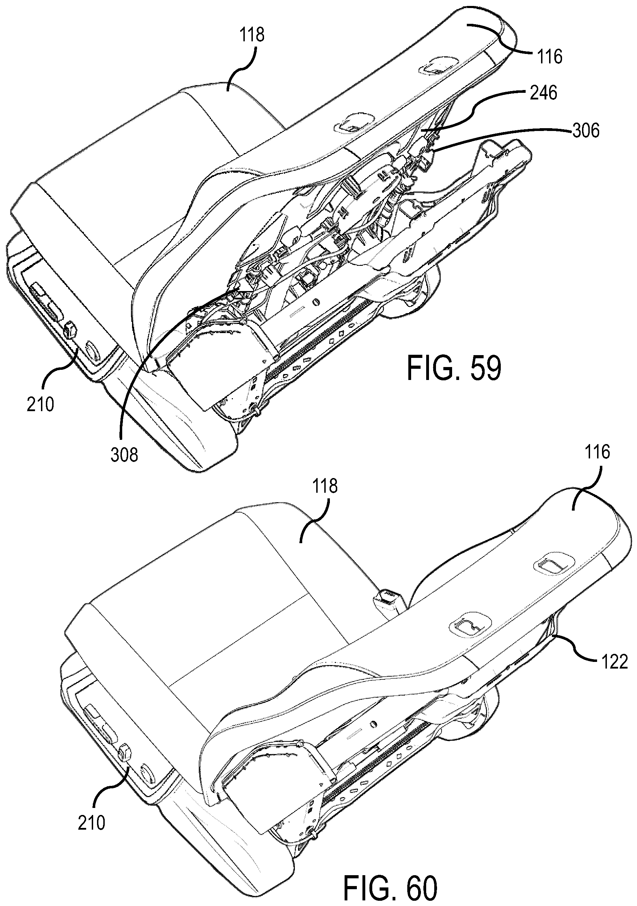

The back carrier 246 may be configured to be rotated about the lower cross member 302 to facilitate engagement of (a) the first tab 306 with the back frame 122 and (b) the second tab 308 with the back frame 122. At least one of the first tab 306 and the second tab 308 may be configured to elastically flex during assembly of the seat back module 116 to the back frame 12. The first tab 306 and the second tab 308 may be configured to flex toward one another during assembly of the seat back module 116 to the back frame 122. The first tab 306 and the second tab 308 may be configured to slide along the back frame 122 during assembly of the seat back module 116 to the back frame 122. The first tab 306 and the second tab 308 may be configured to flex laterally outward away from a centerline 318 of the back frame 122 to snap into engagement with the back frame 122. The tabs 306, 308 may provide a secure, but selective, attachment of the seat back module 116 to the back frame 122 as schematically shown in Fig. 60.

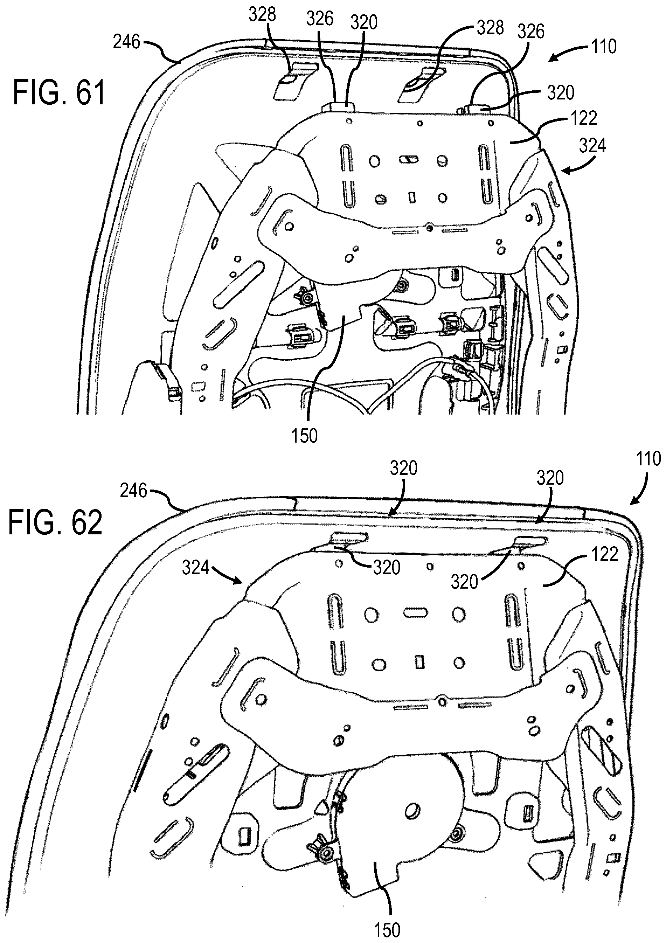

The seat 110 may comprise a registration feature 320 attached to the back frame 122, as schematically shown in Figs. 55-56, 59, 61, 62 and 63. The registration feature 320 may help position and secure a headrest 322 and/or the seat back module 116 to the back frame 122. The registration feature 320 may comprise two hollow posts 320 having a generally square or round cross section that are secured in a generally vertical orientation to the back frame 122. The posts 320 may be one piece unitary and integrally formed with the back frame 122 or they may be separately formed and attached thereto with mechanical fasteners and/or welding. The posts 320 may be attached to the back frame 122 at an upper portion 324 of the back frame 122 such that entrance openings 326 of the posts 320 are accessible and exposed and not blocked by the back frame 122.

The posts 320 may assist in positioning and securing the seat back module 116 to the back frame 122 as schematically depicted in Figs. 60, 61 and 62. The back carrier 246 of the seat back module 116 may have upper apertures 328 that may have a complementary shape to the posts 320. The upper apertures 328 may be part of the registration feature 320. The posts 320 may be located at least partially through the respective upper apertures 328 in the back carrier 246 to secure the back carrier 246 to the back frame 122.

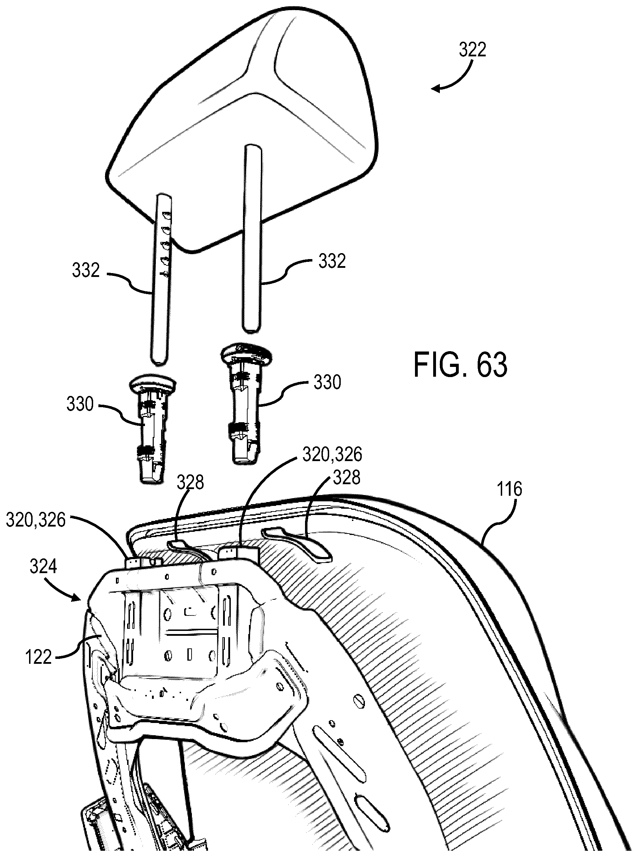

The headrest 322, as schematically shown in Fig. 63, may be connected back frame 122. Selectively removable inserts 330 may be located into the entrance openings 326 of the posts 320. The inserts 330 may receive the legs 332 from the headrest 322. The inserts 330 selectively permit the legs 332 and thus the headrest 322 to selectively move vertically with respect to the back frame 122 and the back carrier 246.

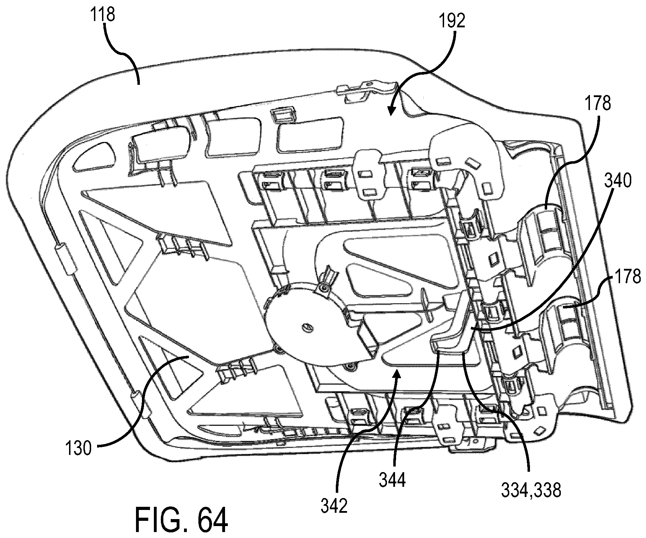

The cushion carrier 130 may comprise a retention feature 334 configured to selectively retain a rear enclosure 336 thereon. The retention feature 334 is schematically depicted in Figs. 64, 65, 66 and 67. The retention feature 334 may comprise at least one hook 338 located on the underside 192 of the cushion carrier 130. The hook 338 may be comprised of a first leg 340 that is directly attached to the underside 192 of the cushion carrier 130 in a central, rearward portion 342 of the cushion carrier 130. The hook 338 may also be comprised of a second leg 344 that extends at an angle to the first leg 340. The second leg 344 may extend generally transverse the first leg 340.

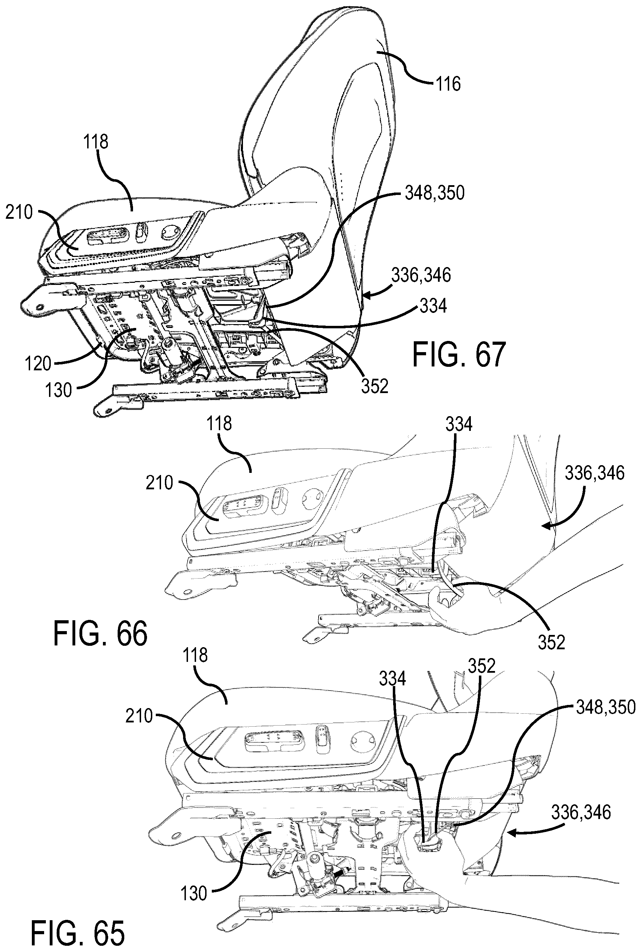

The rear enclosure 336 may be configured to cover at least a portion of the back frame 122 and the cushion carrier 130. The rear enclosure 336 may comprise a flexible panel or sheet with a complementary shape to the back frame 122 and the cushion carrier 130. A lower portion 346 of the rear enclosure 336 may have a strap 348, as schematically shown in Figs. 65-68. End portions 350 of the strap 348 may be secured to the lower portion 346 leaving a middle portion 352 of the strap 348 free. The strap 348 may be comprised of a fabric material. The strap 348 may be comprised of an elastic material.

An installer may locate the strap 348 about the hook 338 based on feel alone as schematically shown in Figs. 65-66. Visual installation of the strap 348 on the hook 338 may not be required. The hook 338 and strap 348 combination may selectively secure the rear enclosure 336 to the cushion carrier 130. The combination may provide a taut connection for the rear enclosure 336 for a secure, wrinkle-free connection.

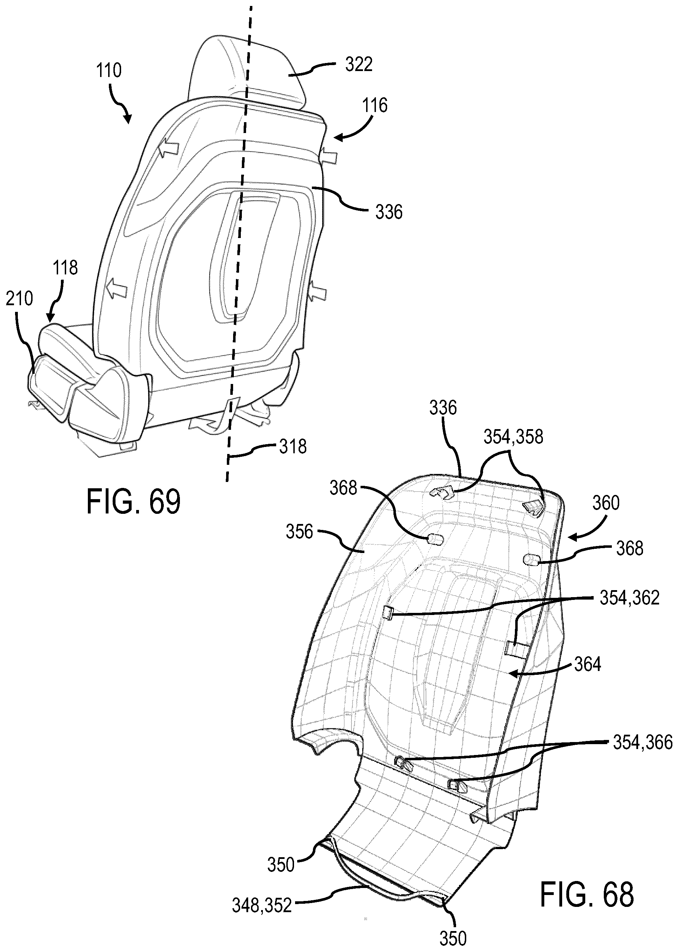

As schematically shown in Fig. 68, the rear enclosure 336 may have attachment features 354. The attachment features 354 may comprise hooks, clips and/or male/female couplings. The attachment features 354 may comprise complementary shaped structures for receivers on the back frame 122 and/or cushion carrier 130. Coupling of the attachment features to the receivers selectively attaches the rear enclosure 336 to the back frame 122 and/or cushion carrier 130 as schematically shown in Fig. 69.

The attachment features 354 may be configured to align the rear enclosure 336 relative to the back frame 122 in lateral and longitudinal directions. One or more of the attachment features 354 in the set may be angled toward the centerline 318 of the back frame 122 which may be a centerline for the seat 110. The attachment features 354 may be one piece, unitary and integrally formed on an interior surface 356 of the rear enclosure 336. A first set of clips 358 may extend from an upper portion 360, 364 of the rear enclosure 336, a second set of clips 366 may extend from the middle portion 364 of the rear enclosure 336, and a third set of clips 366 may extend from the lower portion 346 of the rear enclosure 336. Each of the clips 358, 362, 366 may have a generally J-shaped cross-section.

The rear enclosure 336 may comprise a set of standoffs 368 configured to align the rear enclosure 336 relative to the back frame 122 in the longitudinal direction. The standoffs 368 may be such as pegs that extend from the interior surface356 of the rear enclosure 336 in a generally transverse direction. The standoffs 368 may be adapted to contact an upper cross-frame member 370. The standoffs 368 may be located between the first and second set of clips 358, 362. The standoffs 368 may be one piece, unitary and integrally formed from the rear enclosure 336.

The rear enclosure 336 may comprise a set of tabs configured to align the rear enclosure 336 relative to the back frame 122 in a lateral direction. The tabs may be such as the second set of clips 362 noted above. The rear enclosure 336 may comprise a set of tabs configured to locate the rear enclosure 336 relative to the back frame 122 in a vertical direction and a longitudinal direction. The tabs may be such as the first and third set of clips 358, 366 and the standoffs 368 noted above. The back carrier 246 may comprise a feature configured to align a seam of the seat back trim cover 244 with a seam of the cushion trim cover 160. The feature may be such as one or more of the structures noted above.

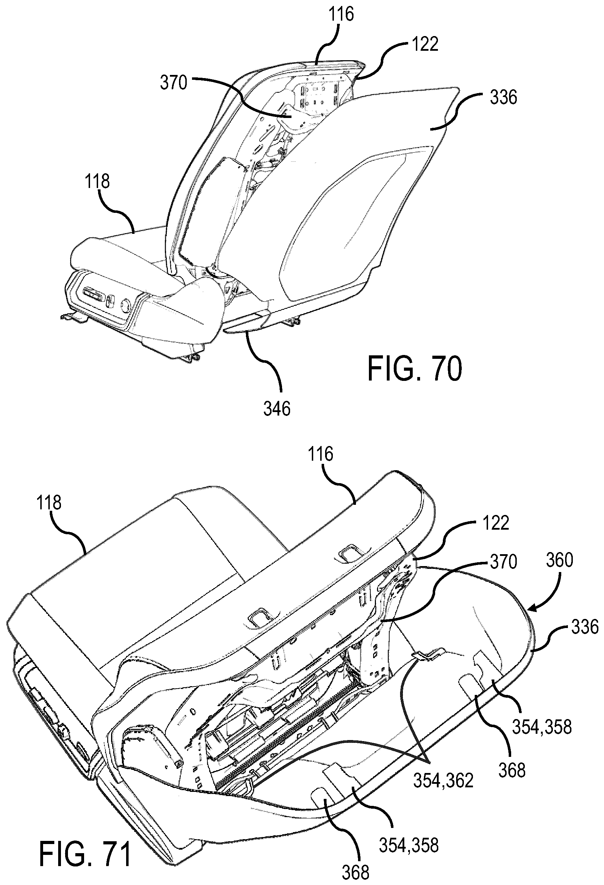

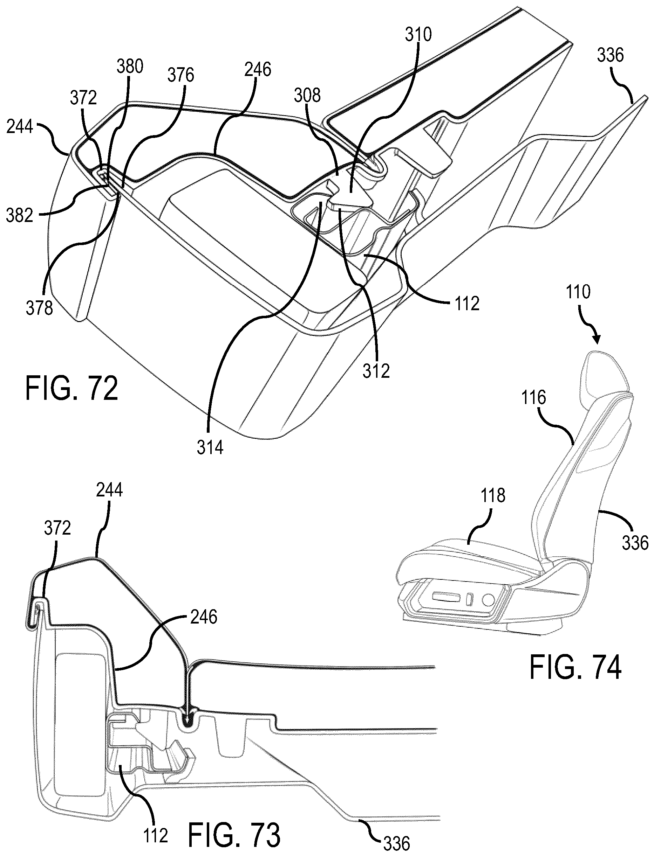

Additionally, or alternatively, the rear enclosure 336 may be connected to the back carrier 246 as schematically shown in Figs. 70-74. The back carrier 246 may comprise a channel 372 on a perimeter portion of the back carrier 246. The channel 372 may be unitary, one piece and integrally formed with the back carrier 246. The channel 372 may comprise a U-shaped cross-section; the same cross-section may extend the length of the channel 372. The channel 372 may extend continuously along the back carrier 246, or it may extend in selective segments. The U-shaped channel 372 may open longitudinally rearward.

A longitudinally forward edge 376 of the rear enclosure 336 may be configured to be selectively nested in the channel 372. An edge 378 of the back trim cover 244 and the forward edge 376 of the rear enclosure 336 may be configured to be nested in the channel 372. The back trim cover 244, the rear enclosure 336 and/or the back carrier 246 may be flexed or bent so that the noted edges 376, 378 selectively nest within the channel 372. The back trim cover 244, the rear enclosure 336 and/or the back carrier 246 may be constructed of an elastic material that when flexed or bent, returns to its original shape and position.

The back trim cover edge 378 may extend into the channel 372 a sufficient length so that the edge 378 is retained within the channel 372. Additionally, the back carrier 246 may comprise a tab 380 configured to selectively retain the rear enclosure 336 in the channel 372. The rear enclosure 336 may comprise a recess 382 configured to mate to the tab 380 of the back carrier 246. The tab 380 may be such as at least one tooth adapted to selectively fit within a complementary shaped recess 382 of the back carrier 246.

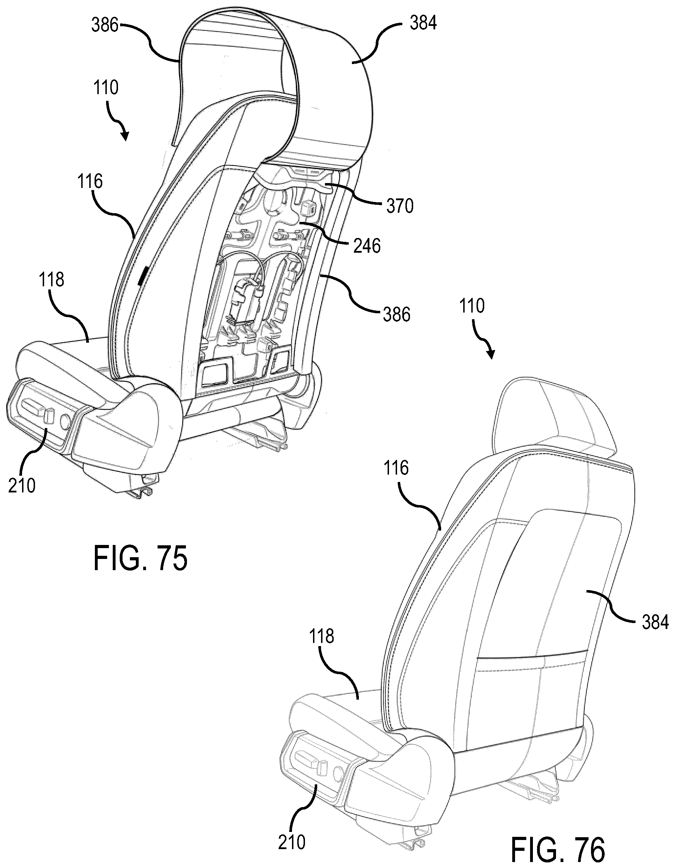

Figs. 75-76 schematically depict a zippered panel 384 for the rear enclosure 336. The panel 384 may be centrally located on the rear enclosure 336. The panel 384 may extend from the upper portion 360 of the rear enclosure 336 to the lower portion 346 of the rear enclosure 336, thus substantially extending the vertical dimension of the rear enclosure 336. A zipper 386 may connect the panel 384 with the rear enclosure 336 at least on one side. A zipper 386 connection may permit easy access to the back carrier 246 and its associated accessories for repair and/or replacement. A zipper 386 may also enable the back trim cover, including the rear enclosure 336, to be selectively located about the back frame 122, back carrier 246 and their associated features to substantially enclose them.

With reference to all the figures, a process for producing a seat 110 for a vehicle 100 may comprise providing a back frame 122 and a seat frame 120. Side shields 210 and a seat cushion module 118 may be attached to the seat frame 120.

The step of assembling a cushion trim cover 160 to a cushion carrier 130 to provide a seat cushion module 118 and coupling the seat cushion module 118 to the frame 120 may comprise snapping an integrally formed rear portion 134 of a cushion carrier 130 to a rear frame tube 180 of the back frame 122 to locate the seat cushion module 118 in a preferred lateral and longitudinal position on the seat 110. The rear portion 134 of the cushion carrier 130 may have a complementary shape to at least a portion the rear frame tube 180.

Snap attachments on the cushion carrier 130 may be initially located within receptables 182 of the seat frame 114 to selectively secure them together with lateral and longitudinal alignment. Alignment features 190 on the cushion carrier 130 interface with the seat frame 114 to provide additional lateral and longitudinal alignment as the cushion carrier 130 pivots downwardly from the rear connection. Snap attachments 196 molded into the front portion 132 of the cushion carrier 130 may engage with complementary shaped devices 198. Anti-squeak materials including soft plastic and/or foam between the above-mentioned features reduce noise and vibration.

Coupling the seat back module 116 to the back frame 122 may comprise assembling a clip 300 of the back carrier 246 to a lower cross member 302 of the back frame 122. Coupling the seat back module 116 to the back frame 122 may comprise rotating the back carrier 246 about the lower cross member 302 via flexing the clip 300. Coupling the seat back module 116 to the back frame 122 may comprise rotating the back carrier 246 about the lower cross member 302 to engage (a) a first tab 306 of the back carrier 246 with the back frame 122 and (b) a second tab 308 of the back carrier 246 with the back frame 122. Engaging the first tab 306 of the back carrier 246 with the back frame 122 and the second tab 308 of the back carrier 246 with the back frame 122 may comprise making snap-fit connections of the first tab 306 and the second tab 308 with the back frame 122. Engaging the first tab 306 of the back carrier 246 with the back frame 122 and the second tab 308 of the back carrier 246 with the back frame 122 may comprise flexing at least one of the first tab 306 and the second tab 308 against the back frame 122. Engaging the first tab 306 of the back carrier 246 with the back frame 122 and the second tab 308 of the back carrier 246 with the back frame 122 may comprise flexing the first tab 306 and the second tab 308 toward a centerline 318 of the seat 110. Engaging the first tab 306 of the back carrier 246 with the back frame 122 and the second tab 308 of the back carrier 246 with the back frame 122 may comprise sliding at least one of the first tab 306 and the second tab 308 along the back frame 122. Coupling the seat back module 116 to the frame 122 may comprise flexing the first tab 306 and the second tab 308 away from a centerline 318 of the back frame 122.

Coupling the seat back module 116 to the back frame 122 may comprise locating inserts 330 through the back carrier 246 and the back frame 122. Head restraint legs 332 may be located into the inserts 330.

Assembling a rear enclosure 336 to the back frame 122 may comprise sliding an edge 376 of the rear enclosure 336 into a channel 372 of the back carrier 246. The seat back module 116 may be snap fit into the back frame 122. Coupling the seat back module 116 to the back frame 122 may comprise closing a zipper 386 of the back trim cover 162 to substantially enclose the back frame 122, back carrier 246 and their associated components. The back frame 122, back carrier 246 and the back trim cover 162 may comprise the seat back module 116. The lower portion 346 of the rear enclosure 336, including a toe kick area, may be secured via a strap 348 to the underside 192 of the cushion carrier.

Different seat cushion modules 118 and seat back modules 116 may be selectively attached to the seat to provide different seat appearances, comfort levels, trim levels and/or features/functions.

In accordance with the provisions of the patent statutes, the present device has been described in what is considered to represent its preferred embodiments. However, it should be noted that the invention can be practiced otherwise than as specifically illustrated and described without departing from its spirit or scope.

### REFERENCE LIST

- 12, 122: back frame
- 100: vehicle
- 102: ground surface
- 104: roof
- 106: road side
- 108: curb side
- 110: seat
- 112: interior
- 114: frame
- 116: seat back module
- 118: seat cushion module
- 120: seat frame/frame
- 122: back frame/frame
- 124, 248: cushioning member
- 126: padding material
- 128: trim piece
- 130: cushion carrier
- 132: front portion
- 134, 176, 216: rear portion
- 136: first side portion
- 138: second side portion
- 140: main support portion
- 142: slots
- 144: seat pan
- 146, 372: channel
- 148: path
- 150: fan
- 152, 174, 264, 284, 296, 314: aperture
- 154: reinforcement
- 156: first section
- 158: second section
- 160: cushion trim cover
- 162, 244: back trim cover
- 164: projection
- 166: rear wall
- 168: arms
- 172: strip
- 178: frame connection member
- 180: rear frame tube
- 182: receptables
- 184: attachments
- 196: attachment structure
- 186: left side
- 188: right side
- 190, 304: alignment feature
- 194: side member
- 196: front attachment structure
- 198: front rim
- 200, 206, 234, 236, 332: leg/legs
- 200, 340: first leg
- 202: trim attachment leg
- 204: gap
- 206, 344: second leg
- 208, 350: end portion
- 210: side shield
- 212, 278: side portion
- 214: forward portion
- 218: various seat controls
- 220, 324, 360, 364: upper portion
- 222, 282, 352, 364: middle portion
- 224, 278, 290, 298, 342, 346, 350: portion
- 226: side bolster portion
- 228: edge portion
- 230: trim groove
- 232: outer perimeter portion
- 234: inner leg
- 236: outer leg
- 238, 310: base portion
- 240, 334: retention feature
- 242: gap skirt
- 246: back carrier
- 250: air distribution system
- 252: blower
- 254: cup
- 256: back side
- 258, 306, 308, 380: tab
- 258, 306: first tab
- 260, 300, 358, 362, 366: clip
- 262, 308: second tab
- 268: lumbar system
- 270: housing
- 272: wire
- 274, 320: posts
- 278, 290, 350: portions
- 280: attachment portion
- 286: bolster portion
- 288, 316, 376, 378: edge
- 290, 312: engagement portion
- 292: mounting portions
- 294: cleats
- 300, 358, 362, 366: clips
- 304: feature
- 306, 308: tabs
- 314: complementary shaped apertures
- 318: centerline
- 320: registration feature
- 322: headrest
- 326: entrance openings
- 328: upper apertures
- 330: inserts
- 336: rear enclosure
- 338: hook
- 348: strap
- 354: attachment features
- 356: interior surface
- 368: standoffs
- 370: upper cross-frame member
- 372: U-shaped channel
- 376: forward edge
- 378: back trim cover edge
- 382: recess
- 384: panel
- 386: zipper

## Claims

1. A seat (110) for a vehicle (100), comprising:
a frame (114), a seat back module (116) and a seat cushion module (118);
wherein the frame comprises a back frame (122) and a seat frame (120);
wherein the seat back module comprises a back trim cover coupled to a back carrier (246);
wherein the seat cushion module (118) comprises cushion trim cover (160) coupled to a cushion carrier (130).

2. The seat (110) of claim 1, wherein the seat cushion module (118) is configured for snap-fit assembly to the seat frame (120) and the seat back module is configured for snap-fit assembly to the back frame (122).

3. The seat (110) of claim 1 or 2, wherein the back carrier (246) comprises a clip (260, 300, 358, 362, 366) and the back frame (122) comprises a lower cross member, wherein the clip (260, 300, 358, 362, 366) is configured to be assembled to the lower cross member, wherein the lower cross member comprises a feature (190, 304, 320, 354) configured for alignment of the clip (260, 300, 358, 362, 366), wherein the feature (190, 304, 320, 354) comprises at least one of (a) a marking; (b) a rib; (c) a projection (164), wherein the clip (260, 300, 358, 362, 366) is configured to flex to facilitate rotation of the back carrier (246) about the lower cross member.

4. The seat (110) of claim 3, wherein the back carrier (246) comprises a first tab (258, 306) and a second tab (262, 308), wherein the back carrier (246) is configured to be rotated about the lower cross member to facilitate engagement of (a) the first tab (258, 306) with the back frame (122) and (b) the second tab (262, 308) with the back frame (122), wherein at least one of the first tab (258, 306) and the second tab (262, 308) is configured to flex during assembly of the seat back module (116) to the back frame (122).

5. The seat (110) of anyone of the preceding claims, further comprising a blower (252), wherein the back carrier (246) is configured for attachment (184, 196) of the blower (252), wherein the blower (252) comprises (a) a tab (258, 306, 308, 380) configured to slide into a cup (254) of the back barrier and (b) an aperture (152, 174, 264, 284, 296, 314, 328) configured to snap on a clip (260, 300, 358, 362, 366) of the back carrier (246).

6. The seat (110) of anyone of the preceding claims, further comprising a side shield (210) assembled to the seat frame (120), wherein an edge (288, 316, 376, 378) of the cushion trim cover (160) is coupled between the cushion carrier (130) and an upper portion (220, 324, 360, 364) of the side shield (210).

7. The seat (110) of anyone of the preceding claims, wherein the seat frame (120) comprises a receptacle (182) configured to receive an attachment (184, 196) of the seat cushion module (118), wherein the receptacle (182) comprises a clip (260, 300, 358, 362, 366), wherein the cushion carrier (130) comprises an attachment (184, 196) configured to snap into the receptacle (182), wherein the attachment (184, 196) comprises a one-piece, unitary attachment (184, 196) integrally formed with the cushion carrier (130).

8. The seat (110) of anyone of the preceding claims, wherein the seat cushion module (118) comprises a cushioning member (124, 248), wherein the cushioning member (124, 248) comprises an aperture (152, 174, 264, 284, 296, 314, 328) configured to facilitate airflow, wherein the cushion carrier (130) comprises a channel adjacent the aperture (152, 174, 264, 284, 296, 314, 328) of the cushioning member (124, 248) configured to facilitate airflow.

9. The seat (110) of anyone of the preceding claims, wherein the cushion carrier (130) comprises a groove (230) on a perimeter of the cushion carrier (130), wherein the groove (230) comprises a U-shape comprising an inner leg (234) and an outer leg (236), wherein the cushion trim cover (160) is wrapped around the outer leg (236) of the groove (230), wherein one of the legs (200, 206, 234, 236, 332) comprises a retention feature (240, 334) configured to retain the seat frame (120) therein, wherein the groove (230) comprises a one-piece, unitary groove (230) integrally formed with the cushion carrier (130).

10. The seat (110) of anyone of the preceding claims, wherein the cushion carrier (130) comprises a retention feature (240, 334) configured to retain a rear enclosure (336) to the seat cushion module (118); wherein the rear enclosure (336) is configured to cover the back frame (122) and a rear portion (132, 134, 176, 216) of the cushion carrier (130); wherein the rear enclosure (336) comprises a strap (348) configured to be retained by the retention feature (240, 334) of the cushion carrier (130).

11. The seat (110) of anyone of the preceding claims, further comprising a cleat (294) assembled to the back frame (122) configured for assembly of the back carrier (246) to the back frame (122).

12. A process for producing a seat (110) for a vehicle (100), comprising:
(a) providing a frame (114, 120, 122);
(b) assembling a back trim cover to a back carrier (246) to provide a seat back module (116);
(c) assembling a cushion trim cover (160) to a cushion carrier (130) to provide a seat cushion module (118);
(d) coupling the seat cushion module (118) to the frame (120); and
(e) coupling the seat back module (116) to the frame (122).

13. The process of claim 12, wherein the step of coupling the seat (110) back module to the frame comprises assembling a clip (260, 300, 358, 362, 366) of the back carrier (246) to a lower cross member of the back frame (122); and
wherein the step of coupling the seat back module (116) to the frame (122) further comprises rotating the back carrier (246) about the lower cross member via flexing the clip (260, 300, 358, 362, 366).

14. The process of claim 13, wherein the step of coupling the seat back module (116) to the frame (122) further comprises rotating the back carrier (246) about the lower cross member to engage (a) a first tab (258, 306) of the back carrier (246) with the back frame (122) and (b) a second tab (262, 308) of the back carrier (246) with the back frame (122);
wherein engaging the first tab (258, 306) of the back carrier (246) with the back frame (122) and the second tab (262, 308) of the back carrier (246) with the back frame (122) comprises flexing at least one of the first tab (258, 306) and the second tab (262, 308) against the back frame (122).

15. The process of claim 12, wherein the step of coupling the seat cushion module (118) to the frame (120) comprises (a) snapping an attachment (184, 196) of the cushion carrier (130) into a receptable (182, 184) of the frame (120) and (b) snapping the cushion module (118) on a front edge portion of the cushion carrier (130).
